# EUROPÄISCHE PATENTSCHRIFT

(11) **EP 2 621 940 B1**
(45) Veröffentlichungstag und Bekanntmachung des Hinweises auf die Patenterteilung: **26.08.2015**
(21) Anmeldenummer: 11751828.2
(22) Anmeldetag: 30.08.2011
(51) Int. Cl.: C07F 9/535, C07F 9/54, C07F 9/58, C07B 51/00

(54) **FLUORALKYLFLUORPHOSPHORAN-ADDUKTE**
FLUOROALKYL FLUOROPHOSPHORANE ADDUCTS
PRODUITS D'ADDITION SOUS FORME DE FLUOROALKYLFLUOROPHOSPHORANES

(30) Priorität: 27.09.2010 EP 10010829; 27.09.2010 EP 10010828
(43) Veröffentlichungstag der Anmeldung: 07.08.2013
(73) Patentinhaber: Merck Patent GmbH, 64271 Darmstadt (DE)
(72) Erfinder: HOGE, Berthold Theo, 33604 Bielefeld (DE); BADER, Anne Julia, 33615 Bielefeld (DE); IGNATYEV, Nikolai (Mykola), 47058 Duisburg (DE); SCHULTE, Michael, 65474 Bischofsheim (DE)
(86) Internationale Anmeldenummer: PCT/EP2011/004354
(87) Internationale Veröffentlichungsnummer: WO 2012/041431

(56) Entgegenhaltungen:
- WO-A1-03/002579
- WO-A1-2011/072810
- DE-A1- 19 846 636
- JOEL J. KAMPA ET AL: "Die Synthese von Tris(perfluoralkyl)-phosphanen", ANGEWANDTE CHEMIE (INTERNATIONAL ED. IN ENGLISH), Bd. 107, Nr. 11, 2. Juni 1995 (1995-06-02) , Seiten 1334-1337, XP55015871, ISSN: 0044-8249, DOI: 10.1002/ange.19951071117
- Peter G. M. Wuts, Theodora W. Greene: "Greene's Protective Groups in Organic Synthesis, 4th Edition", Dezember 2006 (2006-12), Wiley-Interscience, XP002666672, Seiten 279,420

## Beschreibung

Die Erfindung betrifft Perfluoralkylfluorphosphoran-Addukte und deren Verwendung zur Maskierung von OH-Gruppen in organischen Verbindungen.

Fluoralkylfluorphosphorane, insbesondere Perfluoralkylfluorphosphorane, sind starke Lewis-Säuren, die sehr gut mit Nucleophilen reagieren. Aus WO 2008/092489 ist beispielsweise die Reaktion des 1-Ethyl-3-methylimidazolium chlorids mit Tris(pentafluorethyl)difluorphosphoran in Acetonitril bekannt, wobei die ionische Flüssigkeit 1-Ethyl-3-methylimidazolium tris(pentafluorethyl)difluorchlorphosphat entsteht.

Die Umsetzung der Fluoralkylfluorphosphorane, insbesondere der Perfluoralkylfluorphosphorane, mit Sauerstoff-enthaltenden Nucleophilen führt jedoch in der Regel zu komplexen Mischungen von Verbindungen.

Das Dokument WO 03/002579 A1 offenbart in Beispiel 11 eine Reaktionsmischung in welcher DMF und HF vorgelegt wurden und dann Difluortris(pentafluorethyl)phosphoran hinzugefügt wurde.

Das Dokument DE 198 46 636 A1 offenbart in den Beispielen 1 bis 3 Lösungen von Verbindungen der Formeln III-V in CD₃COCD₃.

In Joel J. Kampa et al, Angewandte Chemie (International Ed. In English), Bd. 107, Nr. 11, Seiten 1334-1337 werden Reaktionen von Verbindungen der Formeln 1-7 mit P(SiMe₃)₃ beschrieben, wobei Me Methyl bedeutet.

In Peter G. M. Wuts, Theodora W. Greene: "Greene's Protective Groups in Organic Synthesis, 4th Edition", Dezember 2006, Wiley-Inferscience wird ein Verfahren zum Schutz von Hydroxylgruppen organischer Verbindungen unter Verwendung von Me₂P(S)Cl odr Me₂P(O)Cl beschrieben, wobei Me Methyl bedeutet.

Es besteht jedoch auf dem Gebiet der Synthese von chemischen Verbindungen weiterhin ein Bedarf, die Fluroralkylfluorphosphorane, insbesondere die Perfluoralkylfluorphosphorane, als Ausgangsmaterial auch für die Umsetzung mit Sauerstoff-enthaltenden Nucleophilen zu nutzen.

Überraschenderweise wurde gefunden, dass die Reaktivität und damit die Lewis-Acidität der Fluoralkylfluorphosphorane, insbesondere der Perfluoralkylphosphorane, gezielt gesteuert werden kann, in dem Addukte mit geeigneten Lewis-Basen hergestellt werden. Diese Addukte sind hervorragende Ausgangsmaterialien für die Umsetzung mit Sauerstoff-enthaltenden Nucleophilen und es entstehen bei der Reaktion definierte Verbindungen und keine komplexen Gemische.

Der erste Gegenstand der Erfindung betrifft demzufolge die Verbindungen der Formel I

[P(R_{f})nF₅₋ₙD]⁻

wobei R_{f} jeweils unabhängig voneinander eine geradkettige oder verzweigte Fluoralkylgruppe mit 1 bis 8 C-Atomen bedeutet,
n 1, 2 oder 3 bedeutet und
D eine Lewis-Base nach Anspruch 1 bedeutet,
und/oder Tautomere oder Stereoisomere, einschließlich deren Mischungen in allen Verhältnissen.

Eine geradkettige oder verzweigte Fluoralkylgruppe mit 1 bis 8 C-Atomen ist eine teilweise fluorierte oder perfluorierte geradkettige oder verzweigte Alkylgruppe mit 1 bis 8 C-Atomen, d.h. im Fall einer perfluorierten Alkylgruppe sind alle H-Atome dieser Alkylgruppe durch F ersetzt. Im Fall einer teilfluorierten Alkylgruppe mit 1 bis 8 C-Atomen besitzt die Alkylgruppe mindestens ein F-Atom, 1, 2, 3 oder 4 H-Atome sind vorhanden und die übrigen H-Atome dieser Alkylgruppe sind durch F ersetzt. Bekannte geradkettige oder verzweigte Alkylgruppen sind Methyl, Ethyl, Propyl, Isopropyl, n-Butyl, sec.-Butyl, tert.-Butyl, n-Pentyl, n-Hexyl, n-Heptyl oder n-Octyi. Bevorzugte Beispiele für die teilfluorierte geradkettige oder verzweigte Alkylgruppe R_{f} sind CF₃-CHF-CF₂-, CF₂H-CF₂-, CF₃-CF₂-CH₂-, CF₃-CF₂-CH₂-CH₂-, oder CF₃-CF₂-CF₂-CF₂-CF₂-CF₂-CH₂-CH₂-.

Eine geradkettige oder verzweigte Perfluoralkylgruppe mit 1 bits 8 C-Atomen ist beispielsweise Trifluormethyl, Pentafluorethyl, Heptafluorpropyl, Heptafluorisopropyl, n-Nonafluorbutyl, sec.-Nonafluorbutyl, tert.-Nonafluorbutyl, Dodecafluorpentyl, 1-, 2- oder 3-Trifluormethyl-octafluorbutyl, 1,1-, 1,2- oder 2,2-Bis(trifluormethyl)pentafluorpropyl, 1-Pentafluorethylhexafluorpropyl, n-Tridecafluorhexyl, n-Pentadecafluorheptyl oder n-Heptadecafluoroctyl. Bevorzugte Beispiele für die perfluorierte Alkylgruppe R_{f} sind Pentafluorethyl, Heptafluorpropyl, Heptafluorisopropyl, n-Nonafluorbutyl, sec.-Nonafluorbutyl oder tert.-Nonafluorbutyl.

Die Substituenten R_{f} in den Verbindungen der Formel I sind bevorzugt jeweils unaghängig voneinander geradkettige oder verzweigte Perfluoralkylgruppen mit 1 bis 8 C-Atomen, besonders bevorzugt jeweils unabhängig voneinander Perfluoralkylgruppen mit 1 bis 4 C-Atomen, ganz besonders bevorzugt jeweils unabhängig voneinander Perfluoralkylgruppen mit 2 bis 4 C-Atomen, insbesondere ganz besonders bevorzugt Pentafluorethyl oder Nonafluorbutyl. Bevorzugt sind die Substituenten R_{f} in den Verbindungen der Formel I gleich.

Die Zahl n bedeutet 1, 2 oder 3. Vorzugsweise steht n für die Zahl 2 oder 3, ganz besonders bevorzugt für die Zahl 3.

Geeignete Lewis Basen D, die die gewünschten Eigenschaften besitzen, werden beispielsweise ausgewählt aus der Gruppe aromatisches Amin, welches basische Eigenschaften besitzt, Dialkylether, aromatisches oder aliphatisches tertiäres Phosphin, Dialkylformamid, Dialkylacetamid oder N-Alkyl-2-pyrrolidon, wobei die genannten Alkylgruppen jeweils unabhängig voneinander 1 bis 8 C-Atome haben.

Eine geradkettige oder verzweigte Alkylgruppe mit 1 bis 8 C-Atomen ist beispielsweise Methyl, Ethyl, Isopropyl, Propyl, Butyl, sec-Butyl or tert-Butyl, weiterhin Pentyl, 1-, 2- or 3-Methylbutyl, 1,1-, 1,2- or 2,2-Dimethylpropyl, 1-Ethylpropyl, n-Hexyl, n-Heptyl oder n-Octyl.

Bevorzugte aromatische Amine sind beispielsweise Pyridin, Morpholin, Piperazin, Imidazol, Oxazol oder Thiazol, die mit Alkylgruppen mit 1 bis 8 C-Atomen oder Dialkylaminogruppen, die jeweils unabhängig voneinander 1 bis 8 C-Atome besitzen substituiert sein können. Besonders bevorzugte wird das aromatisches Amin ausgewählt aus der Gruppe Pyridin, 4-Methylpyridin oder 4-Dimethylaminopyridin.

Ein geeigneter Dialkylether ist Diethylether.

Auch Triphenylphosphinoxid (Phenyl₃P=O) oder Phosphorsäuretrimethylester (Methyl₃PO₄) können als Lewis-Base D eingesetzt werden.

Bevorzugte aromatische oder aliphatische tertiäre Phosphine sind beispielsweise Triphenylphosphin, Diphenylmethylphosphin, Trimethylphosphin, Triethylphosphin, Tri-*i*-propylphosphin, Tributylphosphin, Trihexylphosphin, Tricyclohexylphosphin._Ein besonders bevorzugtes tertiäres aliphatisches Phosphin ist Trimethylphosphin.

Bevorzugte Dialkylformamide sind beispielsweise Dimethylformamid, Diethylformamid, Dipropylformamid. Ein besonders bevorzugtes Dialkylformamid ist Dimethylformamid.

Bevorzugte Dialkylacetamide sind beispielsweise Dimethylacetamid, Diethylacetamid oder Dipropylacetamid.

Bevorzugte N-Alkyl-2-pyrrolidone sind beispielsweise N-Methyl-2-pyrrolidon, N-Ethyl-2-pyrrolidon, N-Propyl-2-pyrrolidon oder N-Butyl-2-pyrrolidon.

Besonders geeignete Lewis Basen D werden beispielsweise ausgewählt aus der Gruppe aromatisches Amin oder Dialkylformamid, wie zuvor beschrieben.

Ganz besonders bevorzugte Lewis-Basen D sind 4-Dimethylaminopyridin oder Dimethylformamid. Eine insbesondere ganz besonders bevorzugte Lewis-Base D ist 4-Dimethylaminopyridin.

Ein weiterer Gegenstand der Erfindung richtet sich auf ein Verfahren zur Herstellung der Verbindungen der Formel I, wie zuvor beschrieben oder als bevorzugt beschrieben nach Anspruch 4, dadurch gekennzeichnet, dass ein Fluoralkylfluorphosphoran der Formel II

(R_{f})nPF5-n II,

wobei R_{f} jeweils unabhängig voneinander eine geradkettige oder verzweigte Fluoralkylgruppe mit 1 bis 8 C-Atomen bedeutet und n 1, 2 oder 3 bedeutet, mit einer Lewis-Base D, wie in Anspruch 1, 2 oder 3 beschrieben, -umgesetzt wird

Für die bevorzugten Bedeutungen der Subsitutuenten R_{f}, der Zahl n und der Lewis-Base D gelten die Ausführungen wie zuvor beschrieben.

Die Herstellung von Perfluoralkylfluorphosphoranen gemäß Formel II kann nach üblichen, dem Fachmann bekannten Methoden erfolgen. Vorzugsweise werden diese Verbindungen durch elektrochemische Fluorierung geeigneter Ausgangsverbindungen hergestellt [V.Y. Semenii et al., 1985, Zh. Obshch. Khim. 55 (12): 2716-2720; N. V. Ignatyev, P. Sartori, 2000, J. Fluorine Chem. 103: 57-61; WO 00/21969].

Fluoralkylfluorphosphorane können durch eine radikalische Addition von Dialkylphosphiten, (RO)₂P(O)H oder Phosphinen an Fluorolefine erhalten werden [N.O. Brace, J. Org. Chem., 26 (1961), p. 3197-3201; P. Cooper, R. Fields, R.N. Haszeldine, J. Chem. Soc., Perkin I, 1975, p. 702-707; G.M. Burch, H. Goldwhite, R.N. Haszeldine, J. Chem. Soc., 1963, p. 1083-1091] oder zu Fluoralkylolefinen siehe P. Kirsch, Modern Fluoroorganic Chemistry, WILEY-VCH, 2004, p. 174], nachfolgend einer Chlorierung/Fluorierung oder einer oxidativen Fluorierung.

Die Reaktion des Phosphorans der Formel II mit der Lewis-Base, wie zuvor beschrieben oder als bevorzugt beschrieben, erfolgt bei Temperaturen von 0 bis 80°C, bevorzugt von 15 bis 30°C, in Gegenwart eines organischen Lösungsmittels und in einer wasserfreien Atmosphäre. Geeignete Lösemittel sind hier Acetonitril, Dioxan, Dichlormethan, Dimethoxyethan, Dimethylsulfoxid, Tetrahydrofuran oder Dialkylether, beispielsweise Diethylether oder Methyl-*t*-butylether. Bevorzugt wird die Lewis-Base D im Überschuss eingesetzt, d.h. die zugesetzte molare Menge an Lewis-Base ist größer als die molare Menge der Ausgangsverbindung der Formel II, wie zuvor beschrieben.

Die Fluoralkylfluorphosphoran-Addukte der Formel I, insbesondere die Perfluoralkylfluorphosphoran-Addukte der Formel I, können isoliert werden. Sie können jedoch auch in der Reaktionsmischung des Herstellverfahrens mit Nucleophilen umgesetzt werden.

Beispielhaft kann die Struktur der Verbindungen der Formel I wie folgt aufgefasst werden, die die stereoisomere Variabilität der Stellung der F-sowie der Fluoralkylgruppen am P beschreibt. Base bezeichnet hier die Lewis-Base D. 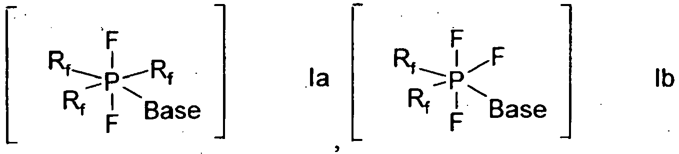 oder

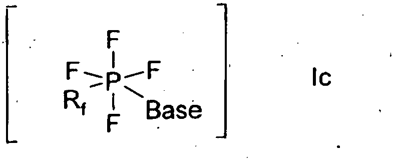

Insbesondere können die Verbindungen der Formel I, wie zuvor beschrieben oder als bevorzugt beschrieben, mit Nucleophilen umgesetzt werden, die ein Sauerstoffatom enthalten.

Die Umsetzung der Verbindungen der Formel I, wie zuvor beschrieben, mit Wasser (HOH), einem Alkohol (ROH) oder einer Carbonsäure (RCOOH) beispielsweise führt zur Herstellung von definierten Verbindungen mit einem korrespondierenden Phosphat-Anion [P(R_{f})ₙF₅₋ₙX]⁻, wobei das freiwerdende Proton durch die Lewis-Base aufgefangen und stabilisiert wird und X OH, OR oder OC(O)R bedeutet, d.h. den Rest des eingesetzten Alkohols oder der Carbonsäure bedeutet und R_{f} und die Zahl n eine zuvor angegebene Bedeutung haben. Beispiele für derartige Umsetzungen werden im Beispielteil angegeben.

Die Verbindungen der Formel I sind jedoch auch hervorragend geeignet, um OH-Gruppen einer organischen Verbindung zu maskieren.

Ein weiterer Gegenstand der Erfindung richtet sich daher auf ein Verfahren zur Maskierung mindestens einer OH-Gruppe einer organischen Verbindung, dadurch gekennzeichnet dass diese Verbindung mit einer Verbindung der Formel I, wie zuvor beschrieben oder als bevorzugt beschrieben, umgesetzt wird.

Die Wahl der organischen Verbindung ist uneingeschränkt, sofern die Verbindung mindestens eine OH-Gruppe trägt, die mit der Verbindung der Formel I reagieren kann.
Die organische Verbindung enthaltend mindestens eine OH-Gruppe ist bevorzugt ein aliphatischer oder aromatischer Alkohol mit mindestens einer OH-Gruppe oder eine oligomere oder polymere Verbindung mit mindestens einer OH-Gruppe.

Geeignete aliphatische oder aromatische Alkohole mit mindestens einer OH-Gruppe sind Methanol, Ethanol, Butanol, Hexanol, Octanol, Allylalkohol, Phenol, Hydrochinon, 1,2-Ethandiol, 1,3-Propandiol, 1,4-Butandiol, 1,2,3-Propantriol (Glycerin), Oxoverbindungen wie z.B. Glycerinaldehyd oder weitere Polyole, d.h. Verbindungen mit mehr als 3 OH-Gruppen.

Als Polyole wird eine Gruppe von organischen Verbindungen bezeichnet, die mehrere Hydroxyygruppen enthalten, hier mindestens drei OH-Gruppen. Polyole können sowohl linear als auch zyklisch aufgebaut sein.

Aus der Gruppe der aliphatischen oder aromatischen Alkohole sind sogenannte Polyole besonders bevorzugt.

Zu den Polyolen gehören beispielsweise D-Threitol, L-Threitol, Erythrol, D-Arabinitol, L-Arabinitol, Adonitol, Xylitol, D-Sorbitol, D-Mannitol oder Galactitol. Weiterhin umfasst der Begriff Polyole auch die Gruppe der Kohlenhydrate, umfassend Monosaccharide, Disaccharide, Oligosaccharide und Polysaccharide oder deren Polyhydroxysäuren.

Monosaccharide sind beispielsweise Erythrose, Threose, Ribose, Arabinose, Xylose, Lyxose, Allose, Altrose, Glucose, Mannose , Gulose, Idose, Galactose, Talose, Dihydroxyaceton, Erythrulose, Ribulose, Xylulose, Psicose, Fructose, Sorbose, Tagatose, umfassend alle stereoismeren Formen, insbesondere die D- und L-Formen sowie alpha- oder beta-Anomere.

Disaccharide sind beispielsweise Saccharose, Lactose, Trehalose, Maltose oder Cellobiose.

Oligosaccharide sind Kohlenhydrate, bestehend aus mindestens drei Kohlenhydrateinheiten, beispielsweise Raffinose oder Acarbose. Polysaccharide sind dadurch gekennzeichnet, dass sie aus vielen Kohlenhydrat-Einheiten zusammengesetzt sind, die ein Makromolekül bilden. Stärke, Glykogen oder Cellulose sind beispielsweise Polysaccharide.

Zu den Polyolen gehören auch Polyesterpolyole oder Polyetherpolyole.

Bevorzugt ist die organische Verbindung enthaltend mindestens eine OH-Gruppe ein Polyol oder ein Polyethylenglykol.
Polyole können durch die Teilformel [-CH₂CHOH-]ₙ beschrieben werden, mit Molekulargewichten zwischen 5000 und 200 000, beispielsweise in Polyvinylalkohol, oder als Co-polymer mit anderen Polymeren, beispielsweise als Poly-(vinylalkohol-co-ethylen) [(CH₂CH₂)ₓ[CH₂CHOH]_{y} mit Molekuklargewichten zwischen 5000 und 200000.

Polyethylenglykol ist je nach Kettenlänge flüssig oder fest und kann durch die Formel H[-O-(CH₂)₂-O]ₘ-H beschrieben werden. Flüssig sind Polyethylenglykole bis zu einer Kettenlänge m von 600 Monomereinheiten. Fest ab einer Kettenlänge von 600 Monomereinheiten.

Besonders bevorzugt werden Polyole maskiert. Im Falle von Polyolen kann die Maskierung der OH-Gruppen vollständig oder teilweise erfolgen, je nach Menge der eingesetzten Verbindungen der Formel I, wie zuvor beschrieben oder als bevorzugt beschrieben. Durch gezielte Steuerung der Menge der eingesetzten Verbindungen der Formel I gelingt es, gezielt einen entsprechenden Anteil an OH-Gruppen im Polyol zu maskieren. Die verbleibenden OH-Gruppen sind weiterhin einer weiteren Derivatisierung zugängig.

Die folgenden Ausführungsbeispiele sollen die Erfindung erläutern, ohne sie zu begrenzen. Die Erfindung ist im gesamten beanspruchten Bereich entsprechend ausführbar. Ausgehend von den Beispielen lassen sich auch mögliche Varianten ableiten. Insbesondere sind die Merkmale und Bedingungen der in den Beispielen beschriebenen Reaktionen auch auf andere, nicht im Detail aufgeführte, aber unter den Schutzbereich der Ansprüche fallende Reaktionen anwendbar.

### Beispiele:

Die erhaltenen Stoffe werden Mittels Massenspektrometrie, Elementaranalyse und NMR- Spektroskopie charakterisiert. NMR-Spektren werden mit den Spektrometern Avance III 300, der Firma Bruker, Karlsruhe, aufgenommen. Aceton-d6 wird in einer Kapillare als Locksubstanz verwendet. Die Referenzierung erfolgt mit externer Referenz: TMS für ¹H und ¹³C Spektren; CCl₃F - für ¹⁹F und 80% H₃PO₄ - für ³¹P Spektren.

### Beispiel 1. Darstellung von [P(C₂F₅)₃F₂(dmap)]

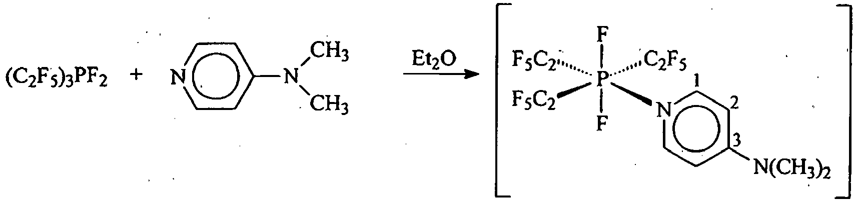

2,8 g (22,9 mmol) 4-(Dimethylamino)pyridin werden in 100 ml Diethylether vorgelegt und langsam mit 12,2 g (28,6 mmol) (C₂F₅)₃PF2 versetzt. Nach 15 Minuten Rühren werden flüchtige Bestandteile im Vakuum entfernt. Es verbleibt ein farbloser Feststoff.
Ausbeute (bezogen auf DMAP): 12,1 g (97 %). Schmelzpunkt: 150 - 153 °C ³¹P, δ, ppm = -144,5, t, quin, t, ¹*J*(PF) = 986 Hz, ²*J*(PF*_{cis}*) = 107 Hz, ²*J*(PF*ₜᵣₐₙₛ*) = 97 Hz, Zuordnung [**P**(C₂F₅)₃F₂(dmap)], in Diethylether.
¹⁹F, δ, ppm = -80,4. m (*trans-*C**F**₃); -81,6 m (*cis*-C**F**₃) ; -99,4 d (P**F**), ¹*J*(PF) = 986 Hz, -111,5 m (br) (*cis*-C**F**₂), -115,3 d,m (*trans*-C**F**₂), ²*J*(PF) = 95 Hz. Messung in CDCl₃.
¹H, δ, ppm = 3,2 s (N(C**H**₃)₂), 6,7 d (H2), ³*J*(HH) = 7 Hz, 8,4 m (br) (H1) Messung in CDCl₃.
¹³C, δ, ppm = 38,6^{a} s (-N(CH₃)₂), 105,9^{a} s (C1), 116,7^{b} m (=**C**F₂CF₃), 118,2^{b} m (-CF₂**C**F₃), 138,9^{a} m (C2), 156,1^{a} s (C3). Messung in CDCl3. ^{a}{¹H} ^{b}{¹⁹F}

Elementaranalytische Daten von [P(C₂F₅)₃F₂(dmap)]

| | N | C | H |
|---|---|---|---|
| berechnet | 5,11 | 28,48 | 1,84 |
| experimentell | 4,91 | 28,63 | 1,67 |

### Beispiel 2. Darstellung von [PPh₄][P(C₂F₅)₃F₂OH]

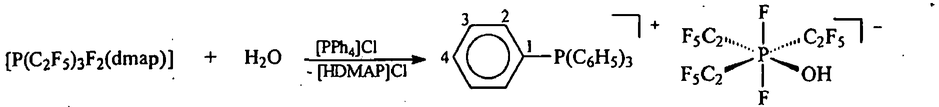

0,96 g (1,75 mmol) [P(C₂F5)₃F₂(dmap)] werden in Ether vorgelegt und mit überschüssigem Wasser versetzt. Nach 30 Minuten Rühren werden 0,66 g (1,75 mmol) [PPh₄]Cl, in 2 ml Wasser gelöst, zugegeben und erneut 20 Minuten gerührt. Anschließend wird die wässrige Phase abgetrennt und die organische Phase dreimal mit Wasser extrahiert. Die organische Phase wird im Vakuum getrocknet. Als Rückstand verbleibt ein farbloser Feststoff. Ausbeute (bezogen auf [P(C₂F₅)₃F₂(dmap)]: 1,29 g (94 %). Schmelzpunkt: 139 °C
³¹P-NMR-spektroskopische Daten von [PPh₄][P(C₂F₅)₃F₂OH] in CD₃CN: ³¹P, δ, ppm = 23,2 s ([**P**Ph₄][P(C₂F₅)₃F₂OH]). -148,3 t, sept ([PPh₄][**P**(C₂F₅)₃F₂OH]), ¹*J*(PF) = 845Hz, ²*J*(PF) = 86 Hz.
¹⁹F (CD₃CN), δ, ppm = -80,1 m (*trans*-C**F**₃); -81,2 m (*cis*-C**F**₃) ; -86,6 d, m (P**F**), ¹*J*(PF) = 846 Hz, -114,1 d(*cis*,*trans*-C**F**₂),²*J*(PF) = 86 Hz.
¹H (CD₃CN), δ, ppm = 5,1 t, d ([P(C₂F₅)₃F₂O**H**]), ³*J*(FH) = 14 Hz, ²*J*(PH) = 3 Hz, 7,8-8,1 m ([P**P**h₄]⁺),

¹³C (CD₃CN), δ, ppm = 118,5^{a} d (C1), ¹*J*(PC) = 90 Hz, 119,1^{b} m (-CF₂CF₃), 120,7^{b} m (-CF₂**C**F₃), 130,3^{a} d (C2), ²*J*(PC) = 13 Hz, 134,7^{a} d (C3), ³*J*(PC) = 10 Hz, 135,4^{a} d (C4), ⁴*J*(PC) = 3 Hz. ^{a}{¹H} b{¹⁹F}

Elementaranalytische Daten von [PPh₄][P(C₂F₅)₃F₂OH]

| | C | H |
|---|---|---|
| berechnet | 46,05 | 2,71 |
| experimentell | 46,40 | 2,79 |

### Beispiel 3. Darstellung von [HDMAP][(C₂F₅)₃PF₂OC(O)CH₃]

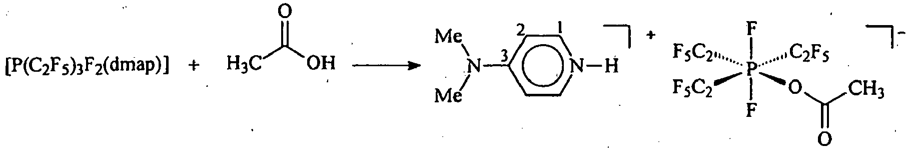

0,52 g (0,96 mmol) [P(C₂F₅)₃F₂(dmap)] werden in Dichlormethan vorgelegt. Bei Raumtemperatur werden 0,19 g (3,17 mmol) Essigsäure zugegeben und das Reaktionsgemisch 3 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 0,54 g (93 %)

³¹P-NMR-spektroskopische Daten von [HDMAP][P(C₂F₅)₃F₂OC(O)CH₃] in CD₃CN

| *δ*, ppm | Multiplizität | *J* [Hz] | Zuordnung |
|---|---|---|---|
| - | **t**, quin, t | ¹*J*(PF) = 915 | [**P**(C₂Fs)₃F₂OC (O)CH₃]⁻ |
| 146,3 | | ²*J*(PF*_{cis}*) = 103 | |
| | | ²*J*(PF*ₜᵣₐₙₛ*) = 84 | |

¹⁹F-NMR-spektroskopische Daten von [HDMAP][(C₂F₅)PF₂OC(O)CH₃] in CD₃CN

| *δ*, ppm | Multiplizität | *J* [Hz] | Zuordnung | Integral |
|---|---|---|---|---|
| -80,2 | m | | *trans*-C**F**3 | 1 |
| -81,8 | m | | *cis*-C**F**₃ | 2 |
| -86,9 | d, m | ¹*J*(PF) = 923 | P**F** | 0,6 |
| -115,3 | d, m | ²*J*(PF) = 85 | *trans*-C**F**₂ | - |
| -116,0 | d, m | ²*J*(PF) = 103 | *cis*-C**F**₂ | - |

¹H-NMR-spektroskopische Daten von [HDMAP][P(C₂F₅)₃F₂OC(O)CH₃] in CD₃CN

| *δ*, ppm | Multiplizität | *J* [Hz] | Zuordnung | Integral |
|---|---|---|---|---|
| 1,9 | s | - | - | 1,6 |
| | | | OC(O)C**H**₃ | |
| 3,2 | s | - | -N(C**H**₃)₂ | 3 1 |
| 6,9 | d | ³*J*(HH) = 7 | H1 | 1 |
| 7,9 | d | ³*J*(HH) = 7 | H2 | 1 |

¹³C-NMR-spektroskopische Daten von [HDMAP][P(C₂F₅)₃F₂OC(O)CH₃] in CD₃CN

| *δ*, ppm | | Multiplizität | *J* [Hz] | Zuordnung |
|---|---|---|---|---|
| 23,3 ^{a} | | s | - | -OC(O)**C**H₃ |
| 39,6 ^{a} | | s | - | -N(**C**H₃)₂ |
| 107,1 ^{a} | | s | - | C1 |
| 116,7 ^{b} | | m | - | -CF₂CF₃ |
| 120,0 ^{b} | | m | - | -CF₂**C**F₃ |
| 138,6 ^{a} | | s | - | C2 |
| 157,7 ^{a} | | s | - | C3 |
| 166,3 ^{a} | | d | ²*J*(PC) = 18 | -O**C**(O)CH₃ |
| ^{a} {¹H} | ^{b} {¹⁹F} | | | |

### Beispiel 4. Darstellung von [HDMAP][P(C₂F₅)₃F₂OPh]

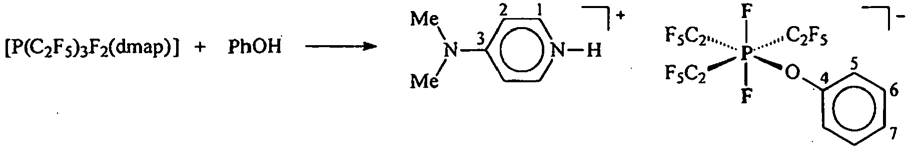

0,52 g (0,95 mmol) [P(C₂F₅)₃F₂(dmap)] werden in Diethylether vorgelegt. Bei Raumtemperatur werden 0,13 g (1,34 mmol) Phenol zugegeben und das Reaktionsgemisch 12 Stunden gerührt. Dabei bilden sich zwei Phasen aus. Das Lösungsmittel wird im Vakuum entfernt. Es verbleibt eine klare, farblose Flüssigkeit.

³¹P-NMR-spektroskopische Daten von [HDMAP][P(C₂F₅)₃F₂OPh] in CD₃CN

| *δ*, ppm | Multiplizität | *J* [Hz] | Zuordnung |
|---|---|---|---|
| -147,5 | t, quin, t | ¹*J*(PF) = 893 | [**P**(C₂F₅)₃F₂OPh]⁻ |
| | | ²*J*(PF*_{cis}*) = 98 | |
| | | ²*J*(PF*ₜᵣₐₙₛ*) = 84 | |

¹⁹F-NMR-spektroskopische Daten von [HDMAP][P(C₂F₅)₃F₂OPh] in CD₃CN

| *δ*, ppm | Multiplizität | *J* [Hz] | Zuordnung | Integral |
|---|---|---|---|---|
| -79,4 | m | - | *trans*-C**F**₃ | - |
| -80,5 | m | - | *cis-*C**F**₃ | - |
| -85,5 | d, m | ¹*J*(PF) = 896 | P**F** | - |
| -111,5 | d, m | ²*J*(PF) = 97 | *cis*-C**F**₂ | - |
| -112,7 | d, m | ²*J*(PF) = 79 | *trans-*C**F**₂ | - |

¹H-NMR-spektroskopische Daten von [HDMAP][P(C₂F₅)₃F₂OPh] in CD₃CN

| *δ*, ppm | Multiplizität | *J* [Hz] | Zuordnung | Integral |
|---|---|---|---|---|
| 3,4 | s | - | -N(C**H**₃)₂ | 3 |
| 6,7 | d | ³*J*(HH) = 7 | H1 | 1 |
| 7,1 | m | - | -OC₆**H**₅ | 2,2 |
| 8,3 | d | ³*J*(HH) = 7 | H2 | 1 |

¹³C-NMR-spektroskopische Daten von [HDMAP][P(C₂F₅)₃F₂OPh] in CD₃CN

| δ, ppm | Multiplizität | *J* [Hz] | Zuordnung |
|---|---|---|---|
| 39,7 ^{a} | s | - | -N(CH₃)₂ |
| 106,9 ^{a} | s | - | C1 |
| 115,2 ^{a} | s | - | C5 |
| 118,1 ^{b} | m | - | -CF₂CF₃ |
| 119,7 ^{b} | m | - | -CF₂CF₃ |
| 120,4 ^{a} | s | - | C6/7 |
| 128,9 ^{a} | s | - | C6/7 |
| 138,8 ^{a} | s | - | C2 |
| 157,0 ^{a} | s | - | C4 |
| 157,6 ^{a} | s | - | C3 |
| ^{a} {¹H} | ^{b} {¹⁹F} | | |

### Beispiel 5. Darstellung von [HDMAP]₂[{P(C₂Fₛ)₃F₂O}₂C₆H₄]

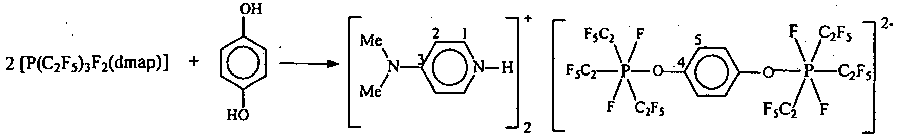

1,11 g (2 mmol) [P(C₂F₅)₃F₂(dmap)] werden in Diethylether vorgelegt. Bei Raumtemperatur werden 0,11 g (1 mmol) Hydrochinon zugegeben und das Reaktionsgemisch 4 Stunden gerührt. Anschließend werden flüchtige Bestandteile im Vakuum entfernt. Es verbleibt ein farbloser Feststoff. Ausbeute (bezogen auf Hydrochinon): 0,85 g (78 %).

³¹P-NMR-spektroskopische Daten von [HDMAP]₂[{P(C₂F₅)₃F₂O}₂C₆H₄] in CD₃CN

| *δ*, ppm | Multiplizität | *J* [Hz] | Zuordnung |
|---|---|---|---|
| -148,0 | t, quin, t | ¹*J*(PF) = 882 | [{**P**(C₂F₅)₃F₂O}₂C ₆H₄]²⁻ |
| | | ²*J*(PF*_{cis}*) = 96 | |
| | | ²*J*(PF*ₜᵣₐₙₛ*) = 78 | |

¹⁹F-NMR-spektroskopische Daten von [HDMAP]₂[{P(C₂F₅)₃F₂O}₂C₆H₄] in CD₃CN

| *δ*, ppm | Multiplizität | *J* [Hz] | Zuordnung | Integral |
|---|---|---|---|---|
| -80,4 | m | - | *trans*-CF3 | 1 |
| -81,6 | m | - | *cis*-CF₃ | 2 |
| -86,9 | d, m | ¹*J*(PF) = 881 | PF | 0,6 |
| -112,9 | d, m | ²*J*(PF) = 98 | *cis*-CF₂ | 1,3 |
| -113,9 | d, m | ²*J*(PF) = 80 | *trans*-CF₂ | 0,7 |

¹H-NMR-spektroskopische Daten von [HDMAP]₂[{P(C₂F₅)₃F₂O}₂CₛH₄] in CD₃CN

| *δ*, ppm | Multiplizität | *J* [Hz] | Zuordnung | Integral |
|---|---|---|---|---|
| 3,1 | s | - | -N(CH₃)₂ | 3 |
| 6,8 | m | - | H5/6 | 0,5 |
| 6,8 | d | ³*J*(HH) = 8 | H1 | 1 |
| 7,9 | d | ³*J*(HH) = 8 | H2 | 1 |

Elementaranalytische Daten von [HDMAP]₂[{P(C₂F₅)₃F₂O}₂C₆H₄]

| | N | C | H |
|---|---|---|---|
| berechnet | 4,67 | 32,07 | 1,51 |
| experimentell | 4,73 | 32,40 | 2,26 |

### Beispiel 6. Darstellung von [HDMAP][P(C₂F₅)₃F₂OEt]

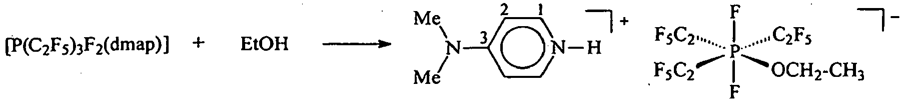

10,6 g (230 mmol) Ethanol werden in 100 ml Et₂O vorgelegt. Bei Raumtemperatur werden 12,5 g (23 mmol) [P(C₂F₅)₃F₂(dmap)] zugegeben und 30 Minuten gerührt. Anschließend werden flüchtige Substanzen über Nacht im Vakuum entfernt. Es verbleibt ein farbloser Feststoff. Ausbeute (bezogen auf [P(C₂F₅)₃F₂(dmap)]): 13,6 g (100 %). Schmelzpunkt: 75 - 78 °C

³¹P-NMR-spektroskopische Daten von [HDMAP][P(C₂F₅)₃F₂OEt] in CD₃CN

| *δ*, ppm | Multiplizität | *J* [Hz] | Zuordnung |
|---|---|---|---|
| -149,4 | t, sept | ¹*J*(PF) = 869 | [**P**(C₂F₅)₃F₂OC₂H₅]⁻ |
| | | ²*J*(PF) = 88 | |

¹⁹F-NMR-spektroskopische Daten von [HDMAP][P(C₂F₅)₃F₂OEt] in CD₃CN

| *δ*, ppm | Multiplizität | *J*[Hz] | Zuordnung | Integral |
|---|---|---|---|---|
| -80,6 | m | - | *trans*-C**F**₃ | 1 |
| -81,8 | m | - | *cis*-C**F**₃ | 2 |
| -94,5 | d | ¹*J*(PF) = 869 | P**F** | 0,6 |
| -113,5 | d, m | ²*J*(PF) = 83 | *trans*-C**F**₂ | 0,6 |
| -114,4 | d, m | ²*J*(PF) = 86 | *cis*-C**F**₂ | 1,3 |

¹H-NMR-spektroskopische Daten von [HDMAP][P(C₂F₅)₃F₂OEt] in CD₃CN

| *δ*, ppm | Multiplizität | *J* [Hz] | Zuordnung | Integral |
|---|---|---|---|---|
| 1,1 | t, d | ¹*J*(HH ) = 7 | -OCH₂C**H**₃ | 1,4 |
| | | ⁴*J*(PH ) = 1 | | |
| 3,2 | s | - | -N(C**H**₃)₂ | 3 |
| 4,0 | pseudoquin | ³*J*(PH ) = 7 | -OC**H**₂CH₃ | 0,9 |
| | | ³*J*(HH ) = 7 | | |
| 5,3 | s | - | -N**H**⁺ | 1 |
| 6,8 | d | ³*J*(HH ) = 7 | H1 | 1 |
| 8,0 | d | ³*J*(HH ) = 7 | H2 | 1 |

¹³C-NMR-spektroskopische Daten von [HDMAP][P(C₂F₅)₃F₂OEt] in CD₃CN

| *δ*, ppm | Multiplizität | *J* [Hz] | Zuordnung |
|---|---|---|---|
| 16,0 ^{a} | d | ³*J*(CP) = 10 | -OCH₂**C**H₃ |
| 39,6 ^{a} | s | - | (CH₃)₂**N**- |
| 61,8^{a} | m | - | -O**C**H₂CH₃ |
| 107,1 ^{a} | s | - | C1 |
| 118.8 ^{b} | m | - | -**C**F₂CF₃ |
| 122,5 ^{b} | m | - | -CF₂**C**F₃ |
| 138,5 ^{a} | s | - | C2 |
| 157,9 ^{a} | s | - | C3 |
| ^{a} {¹H} | ^{b} {¹⁹F} | | |

Elementaranalytische Daten von [HDMAP][P(C₂F₅)₃F₂OEt]

| | N | C | H |
|---|---|---|---|
| berechnet | 4,71 | 30,32 | 2,71 |
| experimentell | 4,74 | 30,32 | 2,69 |

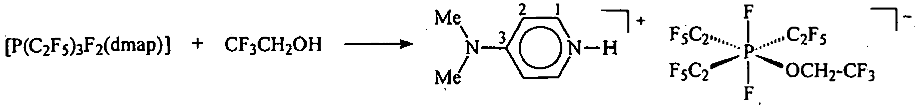

### Beispiel 7. Darstellung von [HDMAP][P(C₂F₅)₃F₂OCH₂CF₃]

2,5 g (4,5 mmol) [P(C₂F₅)₃F₂(dmap)] werden in Diethylether vorgelegt. Bei Raumtemperatur werden 0,9 g (9,0 mmol) Trifluorethanol zugegeben und das Reaktionsgemisch 12 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 2,8 g (95 %). Schmelzpunkt: 91 - 93 °C.

³¹P-NMR-spektroskopische Daten von [HDMAP][P(C₂F₅)₃F₂OCH₂CF₃] in CD₃CN

| *δ*, ppm | Multiplizität | *J* [Hz] | Zuordnung |
|---|---|---|---|
| -149,9 | t, sept | ¹*J*(PF) = 886 | [P(C₂F₅)₃F₂OCH₂CF ₃]⁻ |
| | | ²*J*(PF) = 88 | |

¹⁹F-NMR-spektroskopische Daten von [HDMAP][P(C₂F₅)₃F₂OCH₂CF₃] in CD₃CN

| δ, ppm | Multiplizität | *J* [Hz] | Zuordnung | Integral |
|---|---|---|---|---|
| -75,4 | s | - | [P(C₂F₅)₃F₂OCH ₂C**F**₃]⁻ | 1 |
| -79,6 | m | - | *trans*-C**F**₃ | 1 |
| -80,8 | m | - | *cis*-C**F**₃ | 2 |
| -93,8 | d, m | ¹*J*(PF) = 883 | P**F** | 0,5 |
| -112,2 | d, m | - | *trans-, cis*-C**F**₃ | 2,2 |

¹H-NMR-spektroskopische Daten von [HDMAP][P(C₂F₅)₃F₂OCH₂CF₃] in CD₃CN

| *δ*, ppm | Multiplizität | *J* [Hz] | Zuordnung | Integral |
|---|---|---|---|---|
| 3,2 | s | - | -N(C**H**₃)₂ | 3 |
| 4,4 | quar, d | ³*J(*FH) = 9 | -OC**H**₂CF₃ | 1 |
| | | ³*J*(PH) = 4 | | |
| 6,8 | d | ³*J*(HH) = 7 | H1 | 1 |
| 8,0 | d | - | H2 | 1 |

¹³C-NMR-spektroskopische Daten von [HDMAP][P(C₂F₅)₃F₂OCH₂CF₃] in CD₃CN

| *δ*, ppm | Multiplizität | *J* [Hz] | Zuordnung |
|---|---|---|---|
| 39,6 ^{a} | s | - | -N(**C**H₃)₂ |
| 64,1 ^{a} | m | - | -OCH₂CF₃ |
| 106,9 ^{a} | s | - | C1 |
| 118,8 ^{b} | m | - | -CF₂CF₃ |
| 120,4 ^{b} | m | - | -CF₂**C**F₃ |
| 124,5 ^{b} | m | - | -OCH₂**C**F₃ |
| 138,9 ^{a} | s | - | C2 |
| 157,7 ^{a} | s | - | C3 |
| ^{a}{¹H} | ^{b} {¹⁹F} | | |

Elementaranalytische Daten von [HDMAP][P(C₂F₅)₃F₂OCH₂CF₃]

| | N | C | H |
|---|---|---|---|
| berechnet | 4,32 | 27,79 | 2,02 |
| experimentell | 4,4 7 | 28,10 | 1,64 |

### Beispiel 8. Darstellung von [HDMAP][P(C₂F₅)₃F₂ODec]

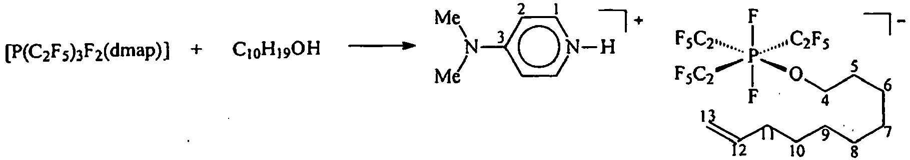

0,69 g (1,25 mmol) [P(C₂F₅)₃F₂(dmap)] werden in Et₂O gelöst. Bei Raumtemperatur werden 0,20 g (1,25 mmol) 9-Decen-1-ol zugegeben und 1,5 Stunden gerührt. Anschließend wird das Reaktionsgemisch im Vakuum getrocknet. Es verbleibt eine klare viskose Flüssigkeit. Ausbeute (bezogen auf [P(C₂F₅)₃F₂(dmap)]): 0,88 g (99 %). Schmelzpunkt: < 20 °C

³¹P-NMR-spektroskopische Daten von [HDMAP][P(C₂F₅)₃F₂ODec] in CDCl₃

| *δ*, ppm | Multiplizität | *J* [Hz] | Zuordnung |
|---|---|---|---|
| -147,2 | t, sept | ¹*J*(PF) = 873 | [P(C₂F₅)₃F₂OC₁₀H_{1 9}]⁻ |
| | | ²*J*(PF) = 88 | |

¹⁹F-NMR-spektroskopische Daten von [HDMAP][P(C₂F5)₃F₂ODec] in CDCl₃

| *δ*, ppm | Multiplizität | *J* [Hz] | Zuordnung | Integral |
|---|---|---|---|---|
| -79,7 | m | - | *trans*-C**F**₃ | 1 |
| -81,0 | m | - | *cis*-C**F**₃ | 2,1 |
| -94,9 | d, m | ¹*J*(PF) = 876 | P**F** | 0,5 |
| -113,0 | d, m | - | *cis-, trans-*C**F**₂ | 2,1 |

¹H-NMR-spektroskopische Daten von [HDMAP][P(C₂F₅)₃F₂ODec] in CDCl₃

| *δ*, ppm | Multiplizität | *J* [Hz] | Zuordnung | Integral |
|---|---|---|---|---|
| 1,2-1,6 | m | - | H6-H10 | 5,7 |
| 1,5 | t | ³*J*(HH) = 7 | H5 | - |
| 2,0 | quin | ³*J*(HH) = 7 | H11 | 1 |
| 3,2 | s | - | -N(C**H**₃)₂ | 3 |
| 3,7 | t | ³*J*(HH) = 7 | H4 | 0,6 |
| 4,9-5,0 | m | - | H13 | 0,9 |
| 5,8 | m | - | H12 | 0,5 |
| 6,7 | d | ³*J*(HH) = 7 | H1 | 1 |
| 7,8 | d | ³*J*(HH) = 7 | H2 | 1 |

¹³C{¹H}-NMR-spektroskopische Daten von [HDMAP][P(C₂F₅)₃F₂ODec] in CDCl₃

| *δ*, ppm | Multiplizität | *J* [Hz] | Zuordnung |
|---|---|---|---|
| 25,7; 28,9; | s | - | C6-C10 |
| 29,0; 29,3; | | | |
| 29,4 | | | |
| 32,8 | s | - | C5 |
| 33,8 | s | - | C11 |
| 40,0 | s | **-** | -N(**C**H₃)₂ |
| 63,2 | s | - | C4 |
| 107,0 | s | - | C1 |
| 114,1 | s | - | C13 |
| 138,5 | s | - | C2 |
| 139,3 | s | - | C12 |
| 157,4 | s | - | C3 |

### Beispiel 9. Darstellung von [HDMAP][P(C₂F₅)₃F₂OC₂H₄OH]

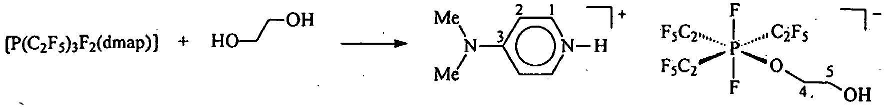

0,60 g (1,1 mmol) [P(C₂F₅)₃F₂(dmap)] werden in Diethylether vorgelegt. Bei Raumtemperatur werden 0,10 g (1,6 mmol) Ethylenglykol zugegeben und das Reaktionsgemisch 24 Stunden gerührt. Anschließend werden flüchtige Bestandteile im Vakuum entfernt. Es verbleibt ein farbloser Feststoff. Ausbeute (bezogen auf [P(C₂F₅)₃F₂(dmap)]): 0.61 g (89 %). Schmelzpunkt: 88 °C (Erweichen der Probe), 91 °C Zersetzung.

³¹P-NMR-spektroskopische Daten von [HDMAP][P(C₂F₅)₃F₂OC₂H₄OH]

| *δ*, ppm | Multiplizität | *J* [Hz] | Zuordnung |
|---|---|---|---|
| -149,2 | t, sept | ¹*J*(PF) = 871 | [**P**(C₂F₅)₃F₂OC₂H₄ OH]⁻ |
| | | ²*J*(PF) = 86 | |

¹⁹F-NMR-spektroskopische Daten von [HDMAP][P(C₂F₅)₃F₂OC₂H₄OH]

| *δ*, ppm | Multiplizität | *J* [Hz] | Zuordnung | Integral |
|---|---|---|---|---|
| -79,3 | m | - | *trans*-C**F**₃ | 1 |
| -80,4 | m | - | *cis*-C**F**₃ | 1,8 |
| -93,2 | d, m | ¹*J*(PF) = 873 | P**F** | 0,3 |
| -112,6 | d, m | ²*J*(PF) = 83 | *trans*-, *cis-*C**F**₂ | 1,8 |

¹H-NMR-spektroskopische Daten von [HDMAP][P(C₂F₅)₃F₂OC₂H₄OH]

| *δ*, ppm | Multiplizität | *J* [Hz] | Zuordnung | Integral |
|---|---|---|---|---|
| 3,2 | s | - | -N(CH₃)₂ | 3 |
| 3,5 | t | ³*J*(HH) = 4 | H5 | 0,8 |
| 4,0 | pseudo-quar | ³*J*(HH) = 4 | H4 | 0,6 |
| | | ³*J*(PH) = 4 | | |
| 6,8 | d | ³*J*(HH) = 8 | H1 | 1 |
| 8,0 | d | ³*J*(HH) = 8 | H2 | 1 |

¹³C-NMR-spektroskopische Daten von [HDMAP][P(C₂F₅)₃F₂OC₂H₄OH]

| *δ*, ppm | Multiplizität | *J*[Hz] | Zuordnung |
|---|---|---|---|
| 39,6^{a} | s | - | -N(CH₃)₂ |
| 62,1^{a} | d | ²*J*(PC) =9 | C4 |
| 67,8^{a} | s | - | C5 |
| 106,8^{a} | s | - | C1 |
| 116,7^{b} | m | - | -CF₂CF₃ |
| 120,6^{b} | m | - | -CF₂CF₃ |
| 138,6^{a} | s | - | C2 |
| 157,6^{a} | s | - | C3 |
| ^{a} {¹H} | ^{b} {¹⁹F} | | |

Elementaranalytische Daten von [HDMAP][P(C₂F₅)₃F₂OC₂H₄OH]

| | N | C | H |
|---|---|---|---|
| berechnet | 4,59 | 29,52 | 2,64 |
| experimentell | 4,62 | 29,54 | 2,28 |

### Beispiel 10. Darstellung von [P(C₂F₅)₃F₂(dmf)]

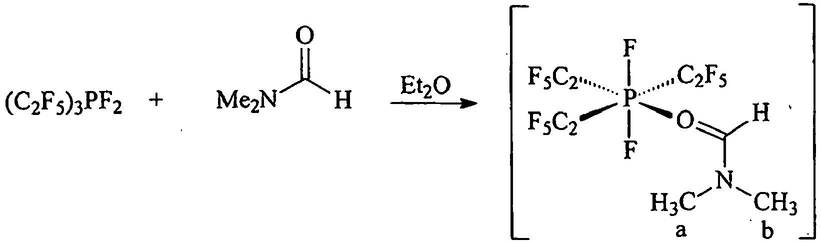

0,12 g (1,7 mmol) DMF werden in ca. 15 ml Diethylether vorgelegt und mit 1,02 g (2,4 mmol) (C₂F₅)₃PF₂ versetzt. Das Reaktionsgemisch wird 45 Minuten bei Raumtemperatur gerührt. Anschließend werden das Lösungsmittel und überschüssiges (C₂F₅)₃PF₂ im Vakuum entfernt. Es verbleibt ein farbloser Feststoff. Ausbeute (bezogen auf DMF): 0,84 g (99 %).

³¹P-NMR-spektroskopische Daten von [P(C₂F₅)₃F₂(dmf)]in DMF

| *δ*, ppm | Multiplizität | *J* [Hz] | Zuordnung |
|---|---|---|---|
| -142,1 | t, t, quin | ¹*J*(PF) = 960 | [P(C₂Fₛ)₃F₂(dmf)] |
| | | ²*J*(PF*trans*) = 87 | |
| | | ²*J*(PF_{cis}) = 103 | |

¹⁹F-NMR-spektroskopische Daten von [P(C₂F₅)₃F₂(dmf)] in DMF

| *δ*, ppm | Multiplizität | *J* [Hz] | Zuordnung | Integral |
|---|---|---|---|---|
| -81,4 | m | - | *trans-*C**F**₃ | 1 |
| -82,4 | m | - | *cis*-C**F**₃ | 2 |
| -92,6 | d, m (br) | ¹*J*(PF)= 947 | **PF** | 0,3 |
| -113,8 | m (br) | - | *cis*-C**F**₂ | 1 |
| -116,4 | d | ²*J*(PF) = 88 | *trans-*C**F**₂ | 0,6 |

¹H-NMR-spektroskopische Daten von [P(C₂F₅)₃F₂(dmf)] in DMF

| *δ*, ppm | Multiplizität | *J* [Hz] | Zuordnung | Integral |
|---|---|---|---|---|
| 2,7 | s | - | C**H**₃(a) | 1 |
| 3,1 | s | - | C**H**₃(b) | 0,9 |
| 8,4 | s | - | [P(C₂F₅)₃F₂(OCHN Me₂)] | 0,3 |

¹³C-NMR-spektroskopische Daten von [P(C₂F₅)₃F₂(dmf)] in DMF

| *δ*, ppm | Multiplizität | *J* [Hz] | Zuordnung |
|---|---|---|---|
| 34,6^{a} | (verdeckt) | - | CH₃(a) |
| 39,8^{a} | quar | ¹*J*(CH) = 143 | CH₃(b) |
| 117,0^{b} | d, m | ¹*J*(CP) = 249 | -CF₂CF₃ |
| 119,0^{b} | d, m | ²*J*(CP) = 30 | -CF₂CF₃ |
| 163,2^{a} | d | ¹*J*(CH) = 218 | [P(C₂F₅)₃F₂(O CHNMe₂)] |
| ^{a} {¹H} | ^{b} {¹⁹F} | | |

### Beispiel 11. Umsetzung von [P(C₂F₅)₃F₂(dmf)] mit H₂O

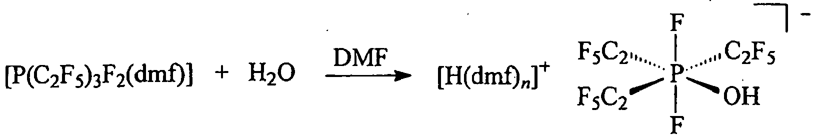

[P(C₂F₅)₃F₂(dmf)] wird in DMF mit wenigen Tropfen Wasser versetzt. Die Reaktionslösung wird NMR-spektroskopisch untersucht.

³¹P-NMR-spektroskopische Daten von [H(dmf)*ₙ*][P(C₂F₅)₃F₂OH] in Aceton-d₆

| *δ*, ppm | Multiplizität | *J* [Hz] | Zuordnung |
|---|---|---|---|
| -147,9 | t, sept | ¹*J*(PF) = 847 | [H(dmf)*ₙ*][**P**(C₂F₅)₃F₂OH] |
| | | ²*J*(PF) = 86 | |

¹⁹F-NMR-spektroskopische Daten von [H(dmf)*ₙ*][P(C₂F₅)₃F₂OH] in Aceton-d₆

| *δ*, ppm | Multiplizität | *J* [Hz] | Zuordnung | Integral |
|---|---|---|---|---|
| -80,5 | m | - | *trans*-C**F**₃ | 1 |
| -81,5 | m | - | *cis*-C**F**₃ | 1,9 |
| -87,0 | d, m | ¹*J*(PF) = 839 | P**F** | 0,6 |
| -114,5 | d | ²*J*(PF) = 85 | *cis*-, *trans-*C**F**₂ | 1,9 |

¹H-NMR-spektroskopische Daten von [H(dmf)*ₙ*][P(C₂F₅)₃F₂OH] in Aceton-d₆

| *δ*, ppm | Multiplizität | *J* [Hz] | Zuordnung | Integral |
|---|---|---|---|---|
| 2,7 | s | - | C**H**₃ (a) | 1,1 |
| 3,0 | s | - | C**H**₃(b) | 1 |
| 8,8 | s | - | [H(OHCNMe₂)*ₙ*] | - |

### Beispiel 12. Umsetzung von [P(C₂F₅)₃F₂(dmf)] mit EtOH

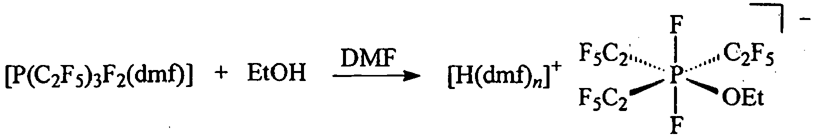

[P(C₂F₅)₃F₂(dmf)] wird in DMF mit wenigen Tropfen Ethanol versetzt. Die Reaktionslösung wird NMR-spektroskopisch untersucht.

³¹P-NMR-spektroskopische Daten von [H(dmf)*ₙ*][P(C₂F₅)₃F₂OEt] in DMF

| *δ*, ppm | Multiplizität | *J*[Hz] | Zuordnung |
|---|---|---|---|
| -148,6 | t, pseudo-sept | ¹*J*(PF) = 871 | [H(dmf)ₙ][**P**(C₂F₅)₃F₂O Et] |

¹⁹F-NMR-spektroskopische Daten von [H(dmf)*ₙ*][P(C₂F₅)₃F₂OEt] in DMF

| *δ*, ppm | Multiplizität | *J* [Hz] | Zuordnung | Integral |
|---|---|---|---|---|
| -79,2 | m | - | *trans*-C**F**₃ | 1 |
| -80,5 | m | - | *cis-*C**F₃** | 1,9 |
| -93,1 | d, m | ¹*J*(PF) = 871 | P**F** | 0,6 |
| -112,3 | d, m | ²*J*(PF) = 83 | *trans*-C**F**₂ | - |
| -113,1 | d, m | ²*J*(PF) = 86 | *cis*-C**F**₂ | - |

### Beispiel 13. Umsetzung von (C₄F₉)₃PF₂ mit DMF

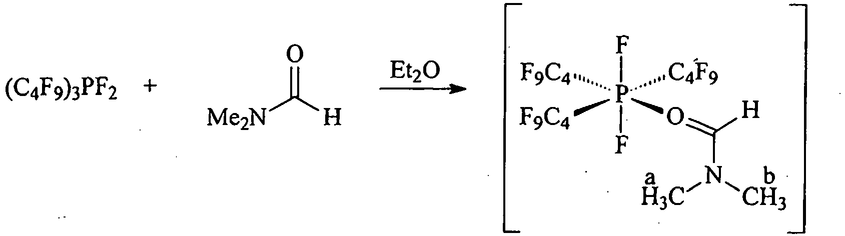

Überschüssiges DMF wird mit (C₄F₉)₃PF₂ versetzt. Die Reaktionslösung wird NMR-spektroskopisch untersucht.

### ³¹P-NMR-spektroskopische Daten von [P(C₄F₉)₃F₂(dmf)] in DMF

| *δ*, ppm | Multiplizität | *J* [Hz] | Zuordnung |
|---|---|---|---|
| -135,5 | t, m | ¹*J*(PF) = 999 | [**P**(C₄F₉)₃F₂(dmf)] |
| | | ²*J*(PF) = 102 | |

¹⁹F-NMR-spektroskopische Daten von [P(C₄F₉)₃F₂(dmf)] in DMF^{a}

| *δ*, ppm | Multiplizität | *J* [Hz] | Zuordnung | Integral |
|---|---|---|---|---|
| -82,1 | s | - | C**F**₃ | - |
| -108,1-- 126,2 | m | - | C**F**₂ | - |

| | | | | |
|---|---|---|---|---|
| ^{a} Die Resonanz der an das Phosphoratom gebundenen Fluoratome wird von anderen Resonanzen überlagert. | | | | |

¹H-NMR-spektroskopische Daten von [P(C₄F₉)₃F₂(dmf)] in DMF

| *δ*, ppm | Multiplizität | *J* [Hz] | Zuordnung | Integral |
|---|---|---|---|---|
| 2,7 | s | - | C**H**₃ (a) | 0,9 |
| 3,1 | s | - | C**H**₃ (b) | 1 |
| 8,4 | s | - | [P(C₄F₉)₃F₂(OC HNMe₂)] | 0,3 |

### Beispiel 14. Umsetzung von [P(C₄F₉)₃F₂(dmf)] mit EtOH

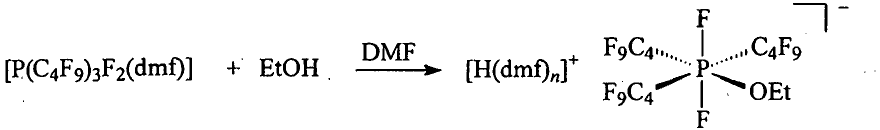

[P(C₄F₉)₃F₂(dmf)] wird in DMF mit wenigen Tropfen Ethanol versetzt. Das Reaktionsgemisch wird NMR-spektroskopisch untersucht.

³¹P-NMR-spektroskopische Daten von [H(dmf)*ₙ*][P(C₄F₉)₃F₂OEt] in DMF

| *δ*, ppm | Multiplizität | *J* [Hz] | Zuordnung |
|---|---|---|---|
| -143,3 | t, m | ¹*J*(PF) = 903 | [H(dmf)*ₙ*][P(C₄F₉)₃F₂OEt] |
| | | ²*J*(PF) = 88 | |

¹⁹F-NMR-spektroskopische Daten von H[P(C₄F₉)₃F₂OEt] - *n*DMF in DMF

| *δ*, ppm | Multiplizität | *J* [Hz] | Zuordnung | Integral |
|---|---|---|---|---|
| -82,3 | m | - | C**F**₃ | - |
| -92,3 | d, m | ¹*J*(PF) = 899 | P**F** | - |
| -109,6-127,6 | m | - | C**F₂** | - |

### Beispiel 15. Darstellung von [P(C₂F₅)₂F₃(dmf)]

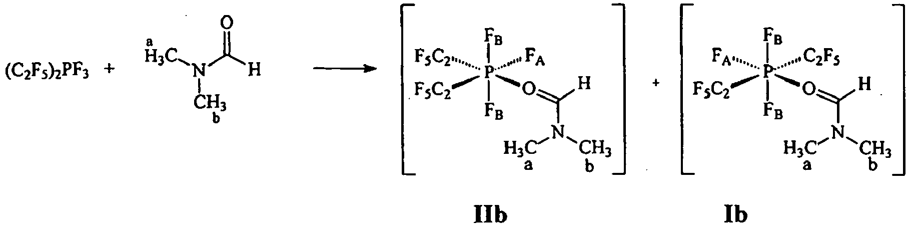

0,09 g (1,2 mmol) DMF werden in ca. 15 ml Diethylether vorgelegt und 1,5 mmol (C₂F₅)₂PF₃ aufkondensiert. Das Reaktionsgemisch wird NMR-spektroskopisch untersucht. Es bilden sich bei langsamem Auftauen zwei Konformere, **IIb** und **Ib**. **IIb** wandelt sich innerhalb weniger Stunden bei Raumtemperatur in **Ib** um. Nach 30-minütigem Rühren bei Raumtemperatur wird das Lösungsmittel im Vakuum entfernt. Es verbleibt ein farbloser Feststoff. Ausbeute (bezogen auf DMF): 0,47 g (97 %).

³¹P-NMR-spektroskopische Daten der beiden Konformere von [P(C₂F₅)₂F₃(dmf)] in DMF

| *δ*, ppm | Multiplizität | *J* [Hz] | Zuordnung |
|---|---|---|---|
| -146,6 | d, t, quin, d | ¹*J*(PF_{A}) = 847 | [**P**(C₂F₅)₂F₃(dmf)] **(IIb)** |
| | | ¹*J*(PF_{B}) = 922 | |
| | | ²*J*(PF) = 95 | |
| | | ³*J*(PH) = 7 | |
| -148,7 | d, t, quin | ¹*J*(PF_{A}) = 947 | [**P**(C₂F₅)₂F₃(dmf)] **(Ib)** |
| | | ¹*J*(PF_{B}) = 986 | |
| | | ²*J*(PF) = 108 | |

¹⁹F-NMR-spektroskopische Daten der beiden Konformere von [P(C₂F₅)₂F₃(dmf)] in DMF

| *δ*, ppm | Multiplizität | *J* [Hz] | Zuordnung | Integral |
|---|---|---|---|---|
| -58,7 | d, m | ¹*J*(PF_{A}) = 848 | P**F**_{A} (**IIb**) | 0,3 |

| | | | | |
|---|---|---|---|---|
| -69,1 | d, m | ¹*J*(PF_{A}) = 948 | P**F_{A} (1b)** | 0,8 |
| -74,9 | d, d, m | ¹*J*(PF_{B}) = 987 | P**F_{B}(Ib)** | 1,7 |
| | | ²*J*(F_{B}F_{A}) = 45 | | |
| -76,2 | d, d, m | ¹*J*(PF_{B}) = 922 | P**F_{B} (IIb)** | 0,7 |
| | | ²*J*(F_{B}F_{A}) = 46 | | |
| -82,7 | m | - | C**F₃ (IIb)** | 1,0 |
| -83,4 | m | - | **CF₃ (IIb)** / C**F**₃ **(Ib)** | 6,2 |
| -117,5 | d, m | ²*J*(PF) = 95 | **CF₂ (IIb)** | 0,6 |
| -118,7 | d, d, t, m | ²*J*(PF) = 108 | C**F₂ (Ib)** | 3,4 |
| | | ³*J*(FF_{B}) = 11 | | |
| | | ³*J*(FF_{B}) = 11 | | |
| -119,5 | d, m | ²*J*(PF) = 93 | C**F**₂ **(IIb)** | 0,6 |

¹H-NMR-spektroskopische Daten der beiden Konformere von [P(C₂F₅)₂F₃(dmf)] in DMF

| *δ*, ppm | Multiplizität | *J* [Hz] | Zuordnung | Integral |
|---|---|---|---|---|
| 2,1 | s | - | C**H**₃ (a) **(IIb)** | 0,3 |
| 2,1 | s | - | C**H**₃ (a) **(Ib)** | 1 |
| 2,4 | s | - | C**H**₃ (b) **(IIb)** | 0,2 |
| 2,5 | s | - | C**H**₃ (b) **(Ib)** | 1 |
| 7,8 | s | - | [P(C₂F₅)₂F₃(OC**HN**Me₂)] **(Ib)** | 0,3 |
| 10,5 | s (br) | - | [P(C₂F₅)₂F₃(OC**HN**Me₂)] **(IIb)** | - |

¹³C-NMR-spektroskopische Daten der beiden Konformere von [P(C₂F₅)₂F₃(dmf)] in DMF

| *δ*, ppm | Multiplizität | *J*[Hz] | Zuordnung |
|---|---|---|---|
| 35,0^{a} | (verdeckt) | - | CH₃ (a) **(Ib)** |
| 40,0^{a} | quar | ¹*J*(CH) = 144 | **CH₃** (b) **(Ib)** |
| 115,5^{b} | d, m | ¹*J*(CP) = 329 | -CF₂CF₃ |
| 119,4^{b} | d, m | ²*J*(CP) = 32 | -CF₂CF₃ |
| 163,4^{a} | d, t | ¹*J*(CH) = 214 | [P(C₂F₅)₂F₃(OCH NMe₂)] **(Ib)** |
| ^{a}{¹H} | ^{b}{¹⁹F} | | |

### Beispiel 16. Umsetzung von [P(C₂F₅)₂F₃(dmf)] mit H₂O

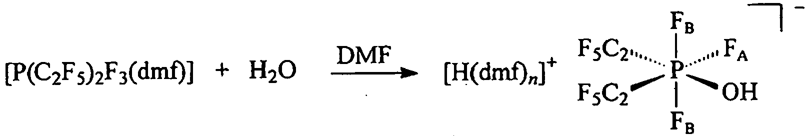

Auf eine Lösung von [P(C₂F₅)₂F₃(dmf)] (**Ib**) in DMF wird bei -196 °C Wasser kondensiert. Das Reaktionsgemisch wird auf Raumtemperatur erwärmt und NMR-spektroskopisch untersucht.

³¹P-NMR-spektroskopische Daten von [H(dmf)*ₙ*][P(C₂F₅)₂F₃OH] in DMF

| *δ*, ppm | Multiplizität | *J* [Hz] | Zuordnung |
|---|---|---|---|
| -154,4 | d, t, quin | ¹*J*(PF_{A}) = 910 | [H(dmf)*ₙ*][P(C₂F₅)₂F₃OH] |
| | | ¹*J*(PF_{B}) = 926 | |
| | | ²*J*(PF) = 108 | |

¹⁹F-NMR-spektroskopische Daten von [H(dmf)*n*][P(C₂F₅)₂F₃OH] in DMF

| *δ*, ppm | Multiplizität | *J*[Hz] | Zuordnung | Integral |
|---|---|---|---|---|
| -63,2 | d, m | ¹*J*(PF) = 910 | PF_{A} | 0,6 |
| -76,0 | d, d, m | ¹*J*(PF) = 926 | PF_{B} | 2 |
| | | ²*J*(FF) = 46 | | |
| -83,4 | d, t | ³*J*(PF) = 11 | CF₃ | 6 |
| | | ³*J*(FF) = 7 | | |
| -118,9 | d, quar | ²*J*(PF) = 103 | CF₂ | 4 |
| | | ³*J*(FF) = 10 | | |

### Beispiel 17. Umsetzung von [P(C₂P₅)₂F₃(dmf)] mit EtOH

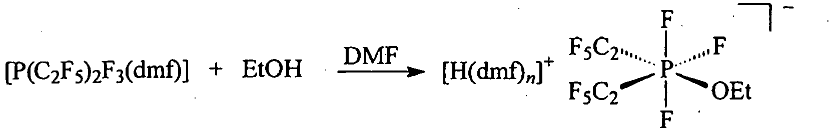

Auf eine Lösung von [P(C₂F₅)₂F₃(dmf)] **(Ib)** in DMF wird bei -196 °C Ethanol kondensiert. Das Reaktionsgemisch wird auf Raumtemperatur erwärmt und NMR-spektroskopisch untersucht.

³¹P-NMR-spektroskopische Daten von [H(dmf)*ₙ*][(P(C₂F₅)₂F₃OEt] in DMF

| *δ*, ppm | Multiplizität | *J* [Hz] | Zuordnung |
|---|---|---|---|
| -152,6 | d, t, quin | ¹*J*(PF_{A}) = 860 | [H(dmf)*ₙ*][P(C₂F₅)₂F₃OEt] |
| | | ¹*J*(PF_{B}) = 876 | |
| | | ²*J*(PF) = 94 | |

¹⁹F-NMR-spektroskopische Daten von [H(dmf)*ₙ*][P(C₂F₅)₂F₃OEt] in DMF

| *δ*, ppm | Multiplizität | *J* [Hz] | Zuordnung | Integral |
|---|---|---|---|---|
| -57,2 | d, m | ¹*J*(PF) = 860 | P**F_{A}** | 1 |
| -78,5 | d, d, m | ¹*J*(PF) = 876 | P**F_{B}** | 2,5 |
| | | ²*J*(FF) = 47 | | |
| -83,5 | d, t | ³*J*(PF) = 13 | C**F₃** | 8 |
| | | ³*J*(FF) = 7 | | |
| -119,3 | d, d, t | ²*J*(PF) = 94 | C**F₂** | 5 |
| | | ³*J*(FF_{A}) = 16 | | |
| | | ³*J*(FF_{B}) = 8 | | |

### Beispiel 18: Umsetzung von (C₂F₅)₃PF₂ · DMAP mit 2-[2-(Aminoethyl)-amino]ethanol

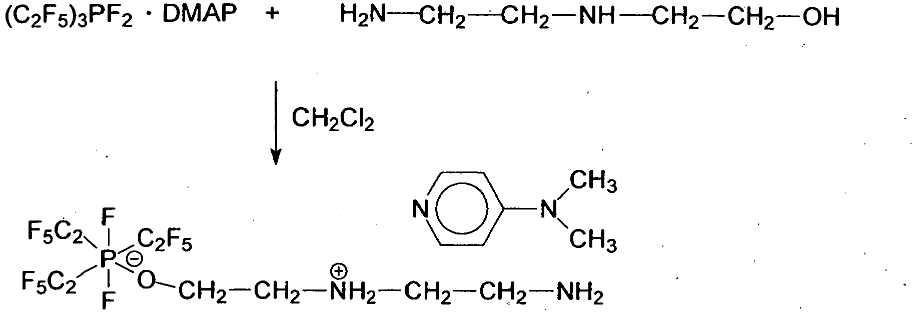

### Versuchsdurchführung:

In einem 100 mL-Schlenkkolben werden unter Schutzgas 6.50 g (11.86 mmol) (C₂F₅)₃PF₂ · DMAP in 80 mL Dichlormethan vorgelegt und die Lösung bei 0 °C tropfenweise mit 1.23 g (11.86 mmol) 2-[2-(Aminoethyl)-amino]ethanol versetzt. Nach der Zugabe wird das Eisbad entfernt und über Nacht bei RT gerührt. Am nächsten Morgen werden ¹⁹F- und ³¹P-NMR-Reaktionskontrollen aufgenommen.

Die Reaktionslösung wird nun im Vakuum vom CH₂Cl₂ und allen flüchtigen Bestandteilen befreit. Zurück bleibt ein leicht gelbes Pulver.

Rohausbeute: 7.71 g (91.7 % d. Th.)

Wird die Reaktion statt in CH₂Cl₂ in DMF durchgeführt, bildet sich ein anderes Isomer, bei dem die beiden F-Atome am Phosphor unterschiedlich sind.

NMR-Daten: in CD₂Cl₂

| **Kern** | **δ (ppm)** | **Aufspaltung** | **Kopplung** | **Zuordnung** |
|---|---|---|---|---|
| ³¹P | -148.9 | t, sept | ¹J_{PF} = 879 | -***P***F₂(C₂F₅)₃ |
| | | | ²J_{PF} = 87 | |
| ¹⁹F | -94.6 | d | ¹J_{PF} = 879 | -P***F*₂**(CF₂CF₃)₃ |
| | -81.2 | m | | -PF₂(CF₂C***F***₃)₃ |
| | -80.0 | m | | (6F) |
| | - | m | | -PF₂(C**F**₂C***F***₃)₃ |
| | -113.4 | m | | (3F) |
| | - | | | -PF₂(C***F***₂CF₃)₃ |
| | -113.7 | | | (4F) |
| | | | | -PF₂(C***F***₂CF₃)₃ |
| | | | | (2F) |
| ¹H | 8.02 | d | ³J_{HH} = 7.0 | DMAP (2H) |
| | 6.67 | d | ³J_{HH} = 7.0 | DMAP (2H) |
| | 5.61 | s, br | | 4H |
| | 4.19 | m | | 2H |
| | 3.13 | s | | DMAP (6H) |
| | 2.89 | m | | 6H |
| ¹³C | 155.9 | s | | DMAP |
| | 144.1 | s | | DMAP |
| | 106.8 | s | | DMAP |
| | 63.2 | m | | -O-***C***H₂- |
| | 48.9 | d | ³J_{CP} = 8.7 | -O-CH₂-***C***H₂-N- |
| | 48.1 | s | | H₂N-(***C***H₂)₂-N- |
| | 39.2 | s | | DMAP |
| | 38.2 | s | | H₂N-(***C***H₂)₂-N- |

### Beispiel 19: Umsetzung von (C₂F₅)₃PF₂ - DMAP mit 6-Hydroxyhexansäureethylester

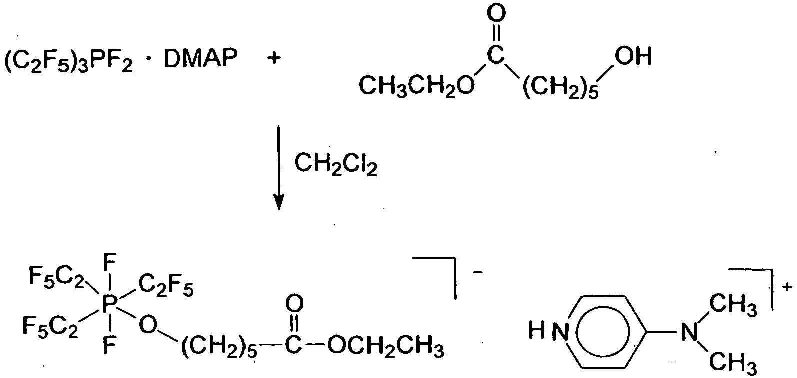

### Versuchsdurchführung:

In einem 100 mL-Schlenkkolben werden unter Schutzgas 3.30 g (6.02 mmol) (C₂F₅)₃PF₂· DMAP in 40 mL Dichlormethan vorgelegt und die Lösung bei 0 °C tropfenweise mit 0.96 g (6.02 mmol) 6-Hydroxyhexansäureethylester versetzt. Nach der Zugabe wird das Eisbad entfernt und über Nacht bei RT gerührt. Am nächsten Morgen werden ¹⁹F- und ³¹P-NMR-Reaktionskontrollen aufgenommen.
Die Reaktionslösung wird im Vakuum vom CH₂Cl₂ und allen flüchtigen Bestandteilen befreit. Zurück bleibt ein oranges Öl.
Rohausbeute: 4.2 g (98.6 % d. Th.
NMR-Daten: in CD₂Cl₂

| **Kern** | ***δ* (ppm)** | **Aufspaltung** | **Kopplung** | ***Zuordnung*** |
|---|---|---|---|---|
| ³¹P | - | t, sept | ¹J_{PF} = 870 | -***P***F2(C₂F5)₃ |
| | 147.9 | | ²J_{PF} = 89 | |
| ¹⁹F | -94.4 | d | ¹J_{PF} = 870 | -P***F***₂(CF₂CF₃)₃ |
| | -80.9 | m | | -PF₂(CF₂C***F***₃)₃ (6F) |
| | 79.8 | m | | -PF₂(CF₂C***F***₃)₃ (3F) |
| | - | m | | -PF₂(C***F***₂CF₃)₃ (4F) |
| | 113.0 | m | | -PF₂(C***F***₂CF₃)₃ (2F) |
| | - | | | |
| | 113.3 | | | |
| ¹H | 7.92 | d | ³J_{HH} = 7.0 | DMAP (2H) |
| | 6.80 | d | ³J_{HH} = 7.0 | DMAP (2H) |
| | 4.13 | q | | -O-C***H***₂CH₃ (2H) |
| | 3.99 | q | | -O-(C***H***₂)₄-CH₂-(2H) |
| | 3.26 | s | | |
| | 2.32 | t | ³J_{HH} = 7.4 | DMAP (6H) |
| | 1.62 | m | | -O-(CH2)4-C***H***₂-C(O)- (2H) |
| | 1.53 | m | | |
| | 1.32 | m | | -O-(C***H***₂)₄-CH₂-(2H) |
| | 1.27 | t | ³J_{HH} = 7.0 | -O-(C***H***₂)₄-CH₂-(2H) |
| | | | | -O-(C***H*₂**)₄-CH₂-(2H) |
| | | | | -O-CH2-C***H***₃ (3H) |
| ¹³C | 174.8 | s | | -C(O)- |
| | 157.5 | s | | DMAP |
| | 138.4 | s | | DMAP |
| | 107.1 | s | | DMAP |
| | 66.8 | m | | -O-***C***H₂-(CH₂)₄- |
| | 60.5 | s | | -O-***C***H₂CH₃ |
| | 40.0 | s | | DMAP |
| | 34.3 | s | | -O-CH₂-CH₂-(***C***H₂)₃- |
| | 30.7 | d | ³J_{PC} = 8.1 | |
| | 25.2 | s | | -O-CH₂-***C***H₂-(CH₂)₃- |
| | 24.7 | s | | |
| | 13.8 | s | | -O-CH₂-CH₂-(***C***H₂)₃- |
| | | | | -O-CH₂-CH₂-(***C***H₂)₃- |
| | | | | -O-CH₂-***C***H₃ |

### Beispiel 20: (C₂F₅)₃PF₂ ·DMAP mit Ethanolamin

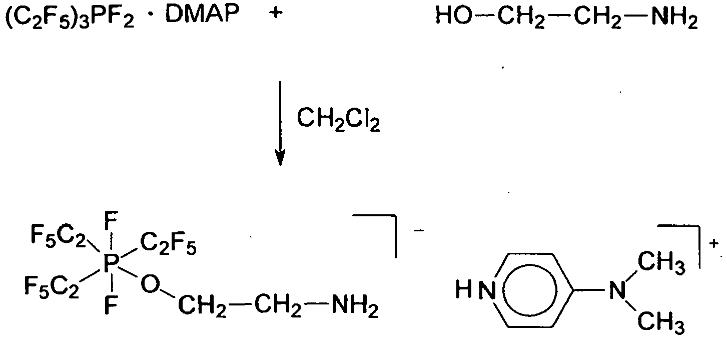

In einem 100 mL-Schlenkkolben werden unter Schutzgas 4.27 g (7.79 mmol) (C₂F₅)₃PF₂ · DMAP in 60 mL Dichlormethan vorgelegt und die Lösung bei 0 °C tropfenweise mit 0.48 g (7.79 mmol) Ethanolamin versetzt. Nach der Zugabe wird das Eisbad entfernt und über Nacht bei RT gerührt. Am nächsten Morgen werden ¹⁹F- und ³¹P-NMR-Reaktionskontrollen aufgenommen.

Die Reaktionslösung wird nun im Vakuum vom CH₂Cl₂ und allen flüchtigen Bestandteilen befreit. Zurück bleibt ein leicht gelbes Pulver.
Rohausbeute: 4.55 g (95.8 % d. Th.)
NMR-Daten: in CD₂Cl₂

| **Kern** | **δ (ppm)** | **Aufspaltung** | **Kopplung** | **Zuordnung** |
|---|---|---|---|---|
| 31p | -148.4 | t, sept | ¹J_{PF} = 875 | -***P***F₂(C₂F₅)₃ |
| | | | ²J_{PF} = 87 | |
| ¹⁹F | -94.7 | d | ¹J_{PF} = 875 | -P***F***₂(CF₂CF₃)₃ |
| | -81.3 | m | | -PF₂(CF₂C***F***₃)₃ (6F) |
| | -80.0 | m | | |
| | -113.3 | m | | -PF₂(CF₂C***F***₃)₃ (3F) |
| | -113.5 | m | | -PF₂(C***F***₂CF₃)₃ (4F) |
| | | | | -PF₂(C***F***₂CF₃)₃ (2F) |
| ¹H | 8.00 | d | ³J_{HH} = 5.2 | DMAP (2H) |
| | 7.73 | s, br | | -NH₂ (2H) |
| | 6.73 | d | ³J_{HH} = 5.2 | DMAP (2H) |
| | 4.15 | m | | -O-(C***H***₂)- |
| | 3.19 | s | | NH₂(2H) |
| | 2.94 | m | | DMAP (6H) |
| | | | | -O-(C***H***₂)-NH₂(2H) |
| ¹³C | 156.7 | s | | DMAP |
| | 141.4 | s | | DMAP |
| | 106.9 | s | | DMAP |
| | 65.2 | m | | -O-***C***H₂-CH₂-NH₂ |
| | 41.8 | d | ³J_{CP} = 8.7 | |
| | 39.6 | s | | -O-CH₂-***C***H₂-**N**H₂ |
| | | | | DMAP |

### Bemerkung:

Wird die Reaktion statt in CH₂Cl₂ in DMF durchgeführt, bildet sich ein anderes Isomer, bei dem die beiden F-Atome am Phosphor unterschiedlich sind.

### Beispiel 21: Umsetzung von (C₂F₅)₃PF₂· DMAP mit 2-Methoxyethanol

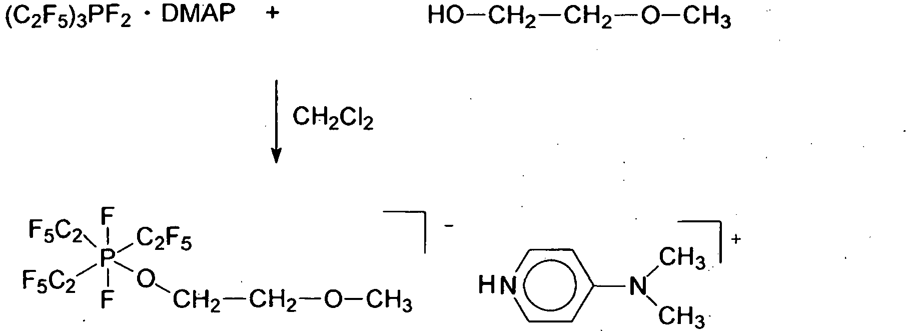

In einem 100 mL-Schlenkkolben werden unter Schutzgas 3.86 g (7.04 mmol) (C₂F₅)₃PF₂ · DMAP in 60 mL Dichlormethan vorgelegt und die Lösung bei 0 °C tropfenweise mit 0.54 g (7.04 mmol) 2-Methoxyethanol versetzt. Nach der Zugabe wird das Eisbad entfernt und über Nacht bei RT gerührt. Am nächsten Morgen werden ¹⁹F- und ³¹P-NMR-Reaktionskontrollen aufgenommen.

Die Reaktionslösung wird nun im Vakuum vom CH₂Cl₂ und allen flüchtigen Bestandteilen befreit. Zurück bleibt ein leicht gelbes Pulver.
Rohausbeute: 4.38 g (99.8 % d. Th.)

### NMR-Daten: in CD₂Cl₂

| Kern | δ (ppm) | Aufspaltung | Kopplung | Zuordnung |
|---|---|---|---|---|
| ³¹P | -147.8 | t, sept | ¹J_{PF} = 878 | -*P***F**₂(C₂F₅)₃ |
| | | | ²J_{PF} = 89 | |
| ¹⁹F | -94.8 | d | ¹J_{PF} = 878 | -P***F***₂(CF₂CF₃)₃ |
| | -81.0 | m | | -PF₂(CF₂C***F***₃)₃ (6F) |
| | -79.9 | m | | |
| | -113.2 | m | | -PF₂(CF₂C***F***₃)₃ (3F) |
| | -113.5 | m | | |
| | | | | -PF₂(C***F***₂CF₃)₃ (4F) |
| | | | | -PF₂(C***F***₂CF₃)₃ (2**F**) |
| ¹H | 8.03 | d | ³J_{HH} = 6.3 | DMAP (2H) |
| | 6.75 | d | ³J_{HH} = 6.3 | DMAP (2H) |
| | 4.27 | m | | -O-(C***H***₂)₂-O-CH₃(2H) |
| | 3.62 | m | | |
| | 3.32 | s | | -O-(C***H***₂)₂-O- |
| | 3.24 | s | | CH₃(2H) -O-C***H***₃ |
| | | | | DMAP (6H) |
| ¹³C | 157.3 | s | | DMAP |
| | 139.3 | s | | DMAP |
| | 106.6 | s | | DMAP |
| | 73.5 | d | ³J_{CP} = 7.9 | -O-CH₂-***C***H₂- |
| | 65.6 | m | | |
| | 57.6 | s | | -O-***C***H₂-CH₂-O-CH₃ |
| | 40.1 | s | | |
| | | | | -O-***C***H₃ DMAP |

### Beispiel 22:

### Umsetzung von (C₂F₅)₃PF₂ mit PMe₃

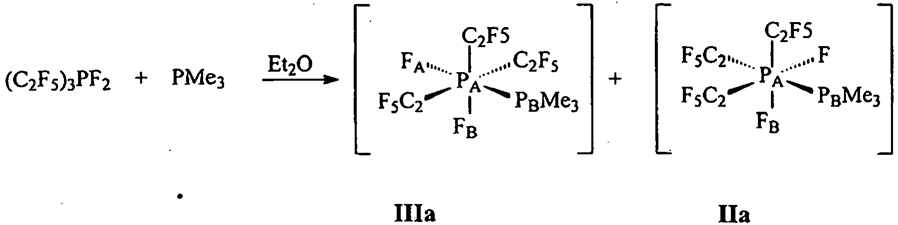

(C₂F₅)₃PF₂ wird in Diethylether gelöst und bei -196 °C überschüssiges PMe₃ aufkondensiert. Die Reaktionslösung wird auf Raumtemperatur erwärmt und NMR-spektroskopisch untersucht.

³¹P{¹H}-NMR-spektroskopische Daten der beiden Konformere von [P(C₂F₅)₃F₂(PMe₃)] in Et₂O

| *δ*, ppm | Multiplizität | *J* [Hz] | Zuordnung |
|---|---|---|---|
| 24,5 | d, t, quin, m | ¹*J*(PP) = 302 | [P(C₂F₅)₃F₂(**P**Me₃)] **(IIa)** |
| | | ²*J*(PF) = 215 | |
| | | ³*J*(PF) = 25 | |
| 16,3 | m | - | [P(C₂F₅)₃F₂(**P**Me₃)] **(IIIa)** |
| -134,8 | d, d, quin, t, d | ¹*J*(PF_{A}) = 923 | [**P**(C₂F₅)₃F₂(**P**Me₃)] **(IIIa)** |
| | | ¹*J*(PF_{B}) = 853 | |
| | | ²*J*(PF) = 102 | |
| | | ²*J*(PF) = 76 | |
| | | ¹*J*(PP) = 53 | |
| -141,9 | t, quin, t, d | ¹*J*(PF) = 889 | [**P**(C₂F₅)₃**F**₂(PMe₃)] **(IIa)** |
| | | ²*J*(PF) = 96 | |
| | | ²*J*(PF) = 68 | |
| | | ¹J(PP) = 303 | |

¹⁹F-NMR-spektroskopische Daten der beiden Konformere von [P(C₂F₅)₃F₂(PMe₃)] in Et₂O

| *δ*, ppm | Multiplizität | *J* [Hz] | Zuordnung | Integral |
|---|---|---|---|---|
| -28,6 | d, d, m | ¹*J*(P_{A}F) = 885 | **PF (IIa)** | 2,2 |
| | | ²*J*(P_{B}F) = 215 | | |
| -29,6 | d, m | ¹*J*(P_{A}F) = 923 | PF_{A} **(IIIa)** | 3,3 |
| -60,0 | d, d, m | ¹*J*(P_{A}F) = 853 | PF_{B} **(IIIa)** | 3,7 |
| | | ²*J*(P_{B}F) = 140 | | |
| -81,3 | m | - | - | 14,1 |
| -81,7 | m | - | - | 16,2 |
| -82,4 | m | - | - | 37,5 |
| -103,9 | m | - | - | 9,8 |
| -104,6 | m | - | - | 4,5 |
| -105,7 | m | - | - | 8,9 |
| -106,4 | m | - | - | 3,2 |
| -107,5 | m | - | - | 0,5 |
| -110,6 | m | - | - | 8,5 |
| -114,7 | m | - | - | 4,3 |

### Beispiel 23. Umsetzung von (C₂F₅)₂PF₃ mit PMe₃

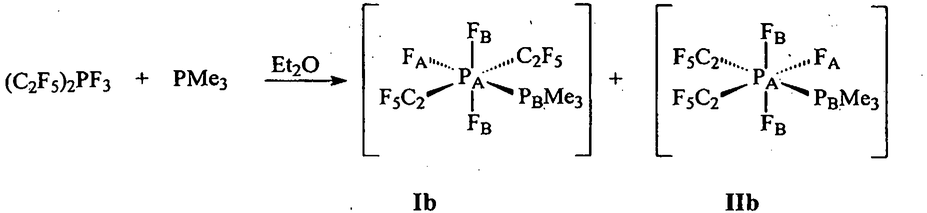

(C₂F₅)₂PF₃ wird in Diethylether gelöst und bei -196 °C überschüssiges PMe₃ aufkondensiert. Die Reaktionslösung wird auf Raumtemperatur erwärmt und NMR-spektroskopisch untersucht.

³¹P{¹H}-NMR-spektroskopische Daten der beiden Konformere von [P(C₂F₅)₂F₃(PMe₃)] in Et₂O

| *δ*, ppm | Multiplizität | *J*[Hz] | Zuordnung |
|---|---|---|---|
| 19,5 | d, d, t, m | ¹*J*(PP) = 463 | [P(C₂F₅)2F₃(**P**Me₃)] **(IIb)** |
| | | ²*J*(PF_{A}) = 268 | |
| | | ²*J*(PF_{B}) = 147 | |
| 10,9 | m | | [P(C₂F₅)₂F₃(**P**Me₃)j " **(Ib)** |
| -139,2 | d, t, d, quin | ¹*J*(PF_{A}) = 907 | [**P**(C₂F₅)₂F₃(PMe₃)] **(Ib)** |
| | | ¹*J*(PF_{B}) = 956 | |
| | | ¹*J*(PP) = 71 | |
| | | ²*J*(PF) = 118 | |
| -140,0 | d, t, d, m | ¹*J*(PF_{A}) = 949 | [**P**(C₂F₅)₂F₃(PMe₃)] **(IIb)** |
| | | ¹*J*(PF_{B}) = 947 | |
| | | ¹*J*(PP) = 465 | |
| | | ²*J*(PF) = 104 | |

¹⁹F-NMR-spektroskopische Daten der beiden Konformere von [P(C₂F₅)₂F₃(PMe₃)] in Et₂O

| *δ*, ppm | Multiplizität | *J* [Hz] | Zuordnung | Integral |
|---|---|---|---|---|
| -21,9 | d, d, m | ¹*J*(P_{A}F) = 945 | PF_{A} **(IIb)** | 0,3 |
| | | ²*J*(P_{B}F) = 268 | | |
| -48,6 | d, m | ¹*J*(PF) = 907 | PF_{A} **(Ib)** | 1 |
| -70,5 | d, d, m | ¹*J*(PF) = 957 | PF_{B} **(Ib)** | 2 |
| | | ²*J*(FF) = 92 | | |
| -72,2 | d, d, d, m | ¹*J̅*(PF) = 948 | PFB **(IIb)** | 0,8 |
| | | ²*J*(PF) = 146 | | |
| | | ²*J*(FF) = 55 | | |
| -80,4 | m | - | CF₃ **(IIb)** | 1 |
| -82,0 | d, quar, d | ³*J*(PF) =21 | CF₃ **(Ib)** | 6 |
| | | ⁴*J*(FF) = 5 | | |
| | | ⁴*J*(P_{B}F) = 1 | | |
| -82,4 | m | - | CF₃ **(IIb)** | 1,1 |
| -112,5 | d, quar | ²*J*(PF) =119 | CF₂ **(Ib)** | 4 |
| | | ³*J*(FF) = 15 | | |
| -117,0 | d, m | ²*J*(PF) = 95 | CF₂ **(IIb)** | - |
| -118,1 | d, m | ²*J*(PF) = 105 | CF₂ **(IIb)** | - |

## Patentansprüche

1. Verbindungen der Formel I
[P(R_{f})ₙF₅₋ₙD] I,
wobei R_{f} jeweils unabhängig voneinander eine geradkettige oder verzweigte Fluoralkylgruppe mit 1 bis 8 C-Atomen bedeutet,
n 1, 2 oder 3 bedeutet und
D Pyridin, Morpholin, Piperazin, Imidazol, Oxazol oder Thiazol bedeutet, die mit Alkylgruppen mit 1 bis 8 C-Atomen oder Dialkylaminogruppen, die jeweils unabhängig voneinander 1 bis 8 C-Atome besitzen, substituiert sein können, oder ein aromatisches oder aliphatisches tertiäres Phosphin, ausgewählt aus der Gruppe Triphenylphosphin, Diphenylmethylphosphin, Trimethylphosphin, Triethylphosphin, Tri-*i-*propylphosphin, Tributylphosphin, Trihexylphosphin, Tricyclohexylphosphin, ein Dialkylformamid, Dialkylacetamid oder N-Alkyl-2-pyrrolidon bedeutet, wobei die genannten Alkylgruppen jeweils unabhängig voneinander 1 bis 8 C-Atome haben und/oder Tautomere oder Stereoisomere, einschließlich deren Mischungen in allen Verhältnissen.

2. Verbindungen der Formel I nach Anspruch 1, **dadurch gekennzeichnet, dass** bei der Definition für D das Dialkylformamid aus der Gruppe Dimethylformamid, Diethylformamid, Dipropylformamid ausgewählt wird, das Dialkylacetamid aus der Gruppe Dimethylacetamid, Diethylacetamid oder Dipropylacetamid ausgewählt wird und das N-Alkyl-2-pyrrolidon aus der Gruppe N-Methyl-2-pyrrolidon, N-Ethyl-2-pyrrolidon, N-Propyl-2-pyrrolidon oder N-Butyl-2-pyrrolidon ausgewählt wird.

3. Verbindungen der Formel I nach Anspruch 1 oder 2, **dadurch gekennzeichnet, dass** D 4-Dimethylaminopyridin oder Dimethylformamid bedeutet.

4. Verfahren zur Herstellung der Verbindungen der Formel I nach einem oder mehreren der Ansprüche 1 bis 3, **dadurch gekennzeichnet, dass** ein Fluoralkylfluorphosphoran der Formel II.
(R_{f})ₙPF₅₋ₙ II,
wobei R_{f} jeweils unabhängig voneinander eine geradkettige oder verzweigte Fluoralkylgruppe mit 1 bis 8 C-Atomen bedeutet und n 1, 2 oder 3 bedeutet, mit einer Lewis-Base D, wie in Anspruch 1, 2 oder 3 beschrieben, bei Temperaturen von 0 bis 80°C und in einer wasserfreien Atmosphäre umgesetzt wird.

5. Verfahren nach Anspruch 4, **dadurch gekennzeichnet, dass** das Perfluoralkylfluorphosphoran oder die Lewis-Base im Überschuss eingesetzt wird.

6. Verfahren zur Maskierung mindestens einer OH-Gruppe einer organischen Verbindung, **dadurch gekennzeichnet dass** diese Verbindung mit einer Verbindung der Formel I nach einem oder mehreren der Ansprüche 1 bis 3 umgesetzt wird.

7. Verfahren nach Anspruch 6, **dadurch gekennzeichnet, dass** die Verbindung enthaltend mindestens eine OH-Gruppe ein aliphatischer oder aromatischer Alkohol mit mindestens einer OH-Gruppe ist oder eine oligomere oder polymere Verbindung mit mindestens einer OH-Gruppe ist.

8. Verfahren nach Anspruch 6 oder 7, **dadurch gekennzeichnet, dass** die Verbindung enthaltend mindestens eine OH-Gruppe ein Polyol oder ein Polyethylenglycol ist.

## Claims

1. Compounds of the formula I
[P(R_{f})ₙF₅₋ₙD] I,
where R_{f} in each case, independently of one another, denotes a straight-chain or branched fluoroalkyl group having 1 to 8 C atoms,
n denotes 1, 2 or 3 and
D denotes pyridine, morpholine, piperazine, imidazole, oxazole or thiazole, each of which may be substituted by alkyl groups having 1 to 8 C atoms or dialkylamino groups, which each, independently of one another have, 1 to 8 C atoms, or an aromatic or aliphatic tertiary phosphine selected from the group triphenylphosphine, diphenylmethylphosphine, trimethylphosphine, triethylphosphine, tri-*i*-propylphosphine, tributylphosphine, trihexylphosphine, tricyclohexylphosphine, a dialkylformamide, dialkylacetamide or N-alkyl-2-pyrrolidone, where the said alkyl groups each, independently of one another, have 1 to 8 C atoms, and/or tautomers or stereoisomers, including mixtures thereof in all ratios.

2. Compounds of the formula I according to Claim 1, **characterised in that**, in the definition of D, the dialkylformamide is selected from the group dimethylformamide, diethylformamide, dipropylformamide, the dialkylacetamide is selected from the group dimethylacetamide, diethylacetamide or dipropylacetamide and the N-alkyl-2-pyrrolidone is selected from the group N-methyl-2-pyrrolidone, N-ethyl-2-pyrrolidone, N-propyl-2-pyrrolidone or N-butyl-2-pyrrolidone.

3. Compounds of the formula I according to Claim 1 or 2, **characterised in that** D denotes 4-dimethylaminopyridine or dimethylformamide.

4. Process for the preparation of the compounds of the formula I according to one or more of Claims 1 to 3, **characterised in that** a fluoroalkylfluoro-phosphorane of the formula II
(R_{f})ₙPF₅₋ₙ II,
where R_{f} in each case, independently of one another, denotes a straight-chain or branched fluoroalkyl group having 1 to 8 C atoms and n denotes 1, 2 or 3, is reacted with a Lewis base D, as described in Claim 1, 2 or 3, at temperatures of 0 to 80°C and in a water-free atmosphere.

5. Process according to Claim 4, **characterised in that** the perfluoroalkyl-fluorophosphorane or the Lewis base is employed in excess.

6. Method for masking at least one OH group of an organic compound, **characterised in that** this compound is reacted with a compound of the formula I according to one or more of Claims 1 to 3.

7. Method according to Claim 6, **characterised in that** the compound containing at least one OH group is an aliphatic or aromatic alcohol containing at least one OH group or is an oligomeric or polymeric compound containing at least one OH group.

8. Method according to Claim 6 or 7, **characterised in that** the compound containing at least one OH group is a polyol or a polyethylene glycol.

## Revendications

1. Composés de formule I
[P(R_{f})ₙF₅₋ₙD] I,
dans laquelle R_{f} dans chaque cas, indépendamment les uns des autres, désigne un groupement fluoroalkyle à chaîne linéaire ou ramifiée ayant de 1 à 8 atomes de C,
n désigne 1, 2 ou 3 et
D désigne pyridine, morpholine, pipérazine, imidazole, oxazole ou thiazole, chacun d'entre eux pouvant être substitué par des groupements alkyle ayant de 1 à 8 atomes de C ou des groupements dialkylamino, qui possèdent chacun, indépendamment les uns des autres, de 1 à 8 atomes de C, ou une phosphine tertiaire aromatique ou aliphatique choisie dans le groupe constitué par la triphénylphosphine, la diphényl-méthylphosphine, la triméthylphosphine, la triéthylphosphine, la tri-*i-*propylphosphine, la tributylphosphine, la trihexylphosphine, la tricyclohexylphosphine, un dialkylformamide, un dialkylacétamide ou une N-alkyl-2-pyrrolidone, où lesdits groupements alkyle possèdent chacun, indépendamment les uns des autres, de 1 à 8 atomes de C, et/ou des tautomères ou stéréoisomères, y compris des mélanges de ceux-ci en toutes proportions.

2. Composés de formule I selon la revendication 1, **caractérisés en ce que**, dans la définition de D, le dialkylformamide est choisi dans le groupe constitué par le diméthylformamide, le diéthylformamide, le dipropylformamide, le dialkylacétamide est choisi dans le groupe constitué par le diméthylacétamide, le diéthylacétamide ou le dipropylacétamide et la N-alkyl-2-pyrrolidone est choisie dans le groupe constitué par la N-méthyl-2-pyrrolidone, la N-éthyl-2-pyrrolidone, la N-propyl-2-pyrrolidone ou la N-butyl-2-pyrrolidone.

3. Composés de formule I selon la revendication 1 ou 2, **caractérisés en ce que** D désigne 4-diméthylaminopyridine ou diméthylformamide.

4. Procédé de préparation des composés de formule I selon l'une ou plusieurs parmi les revendications 1 à 3, **caractérisé en ce qu'**un fluoroalkyl-fluorophosphorane de formule II
(R_{f})ₙPF₅₋ₙ II,
dans laquelle R_{f} dans chaque cas, indépendamment les uns des autres, désigne un groupement fluoroalkyle à chaîne linéaire ou ramifiée ayant de 1 à 8 atomes de C et n désigne 1, 2 ou 3, est réagi avec une base de Lewis D, tel que décrit selon la revendication 1, 2 ou 3, à des températures allant de 0 à 80°C et dans une atmosphère dépourvue d'eau.

5. Procédé selon la revendication 4, **caractérisé en ce que** le perfluoroalkyl-fluorophosphorane ou la base de Lewis est employé(e) en excès.

6. Méthode destinée à masquer au moins un groupement OH d'un composé organique, **caractérisée en ce que** ce composé est réagi avec un composé de formule I selon l'une ou plusieurs parmi les revendications 1 à 3.

7. Méthode selon la revendication 6, **caractérisée en ce que** le composé contenant au moins un groupement OH est un alcool aliphatique ou aromatique contenant au moins un groupement OH ou est un composé oligomère ou polymère contenant au moins un groupement OH.

8. Méthode selon la revendication 6 ou 7, **caractérisée en ce que** le composé contenant au moins un groupement OH est un polyol ou un polyéthylène glycol.
